# EUROPÄISCHE PATENTSCHRIFT

(11) **EP 3 458 779 B1**
(45) Veröffentlichungstag und Bekanntmachung des Hinweises auf die Patenterteilung: **16.08.2023**
(21) Anmeldenummer: 17728044.3
(22) Anmeldetag: 16.05.2017
(51) Int. Cl.: F24S 20/20, F28D 20/00

(54) **PROZESSSYSTEM FÜR DIE REKUPERATION VON WÄRME UND VERFAHREN ZU DESSEN BETRIEB**
PROCESS SYSTEM FOR RECOVERING HEAT, AND A METHOD FOR OPERATING SAME
SYSTÈME DE TRAITEMENT POUR LA RÉCUPÉRATION DE CHALEUR ET PROCÉDÉ PERMETTANT DE FAIRE FONCTIONNER LEDIT SYSTÈME

(30) Priorität: 18.05.2016 CH 6402016
(43) Veröffentlichungstag der Anmeldung: 27.03.2019
(73) Patentinhaber: Synhelion SA, 7000 Chur (CH)
(72) Erfinder: PEDRETTI-RODI, Andrea, 6800 Bellinzona (CH)
(74) Vertreter: Stump, Beat
(86) Internationale Anmeldenummer: PCT/CH2017/000045
(87) Internationale Veröffentlichungsnummer: WO 2017/197536

(56) Entgegenhaltungen:
- DE-A1- 10 260 992
- DE-A1-102010 053 902
- US-A- 4 094 148
- US-A- 4 265 223
- US-A1- 2005 126 170
- US-A1- 2011 100 611
- US-A1- 2013 056 170
- US-A1- 2013 307 273

## Beschreibung

Die vorliegende Erfindung betrifft ein Prozesssystem mit zwischen einer oberen und einer unteren Temperatur arbeitenden Wärmespeichern gemäss dem Oberbegriff des Anspruchs 1 und ein Verfahren zum zyklischen Erwärmen und Kühlen mehrerer Prozesseinheiten gemäss dem Oberbegriff des Anspruchs 7.

Prozesse, die auf verschiedenen Temperaturniveaus ablaufen, sind in der Technik weit verbreitet. Dabei findet ein Prozessschritt auf einer oberen Temperatur und ein anderer Prozessschritt auf einer unteren Temperatur statt, oder ein Prozessschritt findet während der Temperaturänderung statt. Viele Anwendungen betreffend den Fall, dass eine chemische Reaktion mit Hilfe eines Katalysators abläuft. Häufig ist es dann sinnvoll, eine Prozesseinheit in einen oberen Temperaturbereich zu erwärmen und danach in einen unteren Temperaturbereich abzukühlen und diesen Temperaturwechsel zyklisch für fortlaufende Produktion zu wiederholen.

Einer der zahlreichen Anwendungsfälle liegt im Bereich der Herstellung solarer Brennstoffe (solar fuels), deren Ausgangsstoffe H₂ (Wasserstoff) und CO (Kohlenmonoxid) unter Zufuhr von Energie - namentlich Wärme bei hohen Temperaturen- aus H₂O (Wasser) und CO₂ (Kohlendioxid) gebildet werden. Ein Gasgemisch, welches hauptsächlich H₂ und CO-neben weiteren Gasen- enthält, nennt man Synthesegas oder einfach Syngas. Dieses Syngas dient der Herstellung von flüssigen oder gasförmigen Kohlenwasserstoff-Treibstoffen.

In einer ETH Dissertation No. 21864 "SOLAR THERMOCHEMICAL CO2 AND H2O SPLITTING VIA CE-RIA REDOX REACTIONS" von Philipp Furler wird ein experimenteller, solarer Cerium-Reaktor beschrieben, mit welchem unter Einstrahlung von konzentriertem Sonnenlicht (2865 Sonnen, d.h. einer thermischen Strahlung von bis zu 2865 kW/m²) Synthesegas herstellbar ist.

Sonnenlicht in oben erwähnter Konzentration kann auf industrieller Basis beispielsweise mit einem Dish-Konzentrator der Anmelderin gemäss der WO 2011/072410 erzeugt werden, so dass die kommerzielle Produktion von Synthesegas unter Verwendung von erneuerbarer bzw. regenerierbarer Energie realistisch geworden ist.

Gemäss der oben erwähnten ETH Dissertation wird in einem ersten, endothermischen Prozessschritt bis zu einer oberen Temperatur von 1800 K Cerium unter Bildung von Sauerstoff reduziert; anschliessend wird das Cerium nach dem Abschluss der Reduktion auf eine untere Temperatur von 1100 K gekühlt und in einem nachfolgenden Prozessschritt das Synthesegas durch exothermisches Re-oxidieren produziert; dabei ist die endothermisch benötigte Wärme viel grösser als die exothermisch anfallende Wärme. Dieser Prozess kann für eine fortlaufende Produktion von Synthesegas zyklisch wiederholt werden; hierfür muss das Cerium konsequenterweise periodisch auf 1800 K erwärmt werden und auf 1100 K abgekühlt werden. Für eine Rekuperation von durch die Abkühlung entnommener Wärme wird eine Doppel-Ringkonstruktion eines Cerium-Trägers vorgeschlagen. Zwei gegenläufig drehende, aneinander anliegende Cerium-Ringe mit gemeinsamer Rotationsachse liegen zwischen der warmen Zone (1800 K) und der kalten Zone (1100 K) derart, dass sich ein Abschnitt eines jeden Ringes in der warmen Zone auf einer 12-Uhr-Position und ein gegenüberliegender Abschnitt in der kalten Zone auf einer 6-Uhr-Position befindet. Durch eine gegenläufige Drehung unmittelbar benachbarter Cerium-Ringe wandert der kalte Abschnitt eines ersten Cerium-Rings im Uhrzeigersinn in Richtung der warmen Zone und der warme Abschnitt in Richtung der kalten Zone und bei einem zweiten, sich gegen den Uhrzeigersinn drehenden Cerium-Ring wandert ebenfalls der kalte Abschnitt in Richtung der warmen Zone und der warme Abschnitt in Richtung der kalten Zone, wobei beide Cerium-Ringe aneinander vorbei streifen und dadurch laufend Wärmenergie tauschen. Entsprechend werden gegenseitig warme Abschnitte gekühlt und kalte Abschnitte erwärmt, was eine Rekuperation einer Wärmemenge ermöglicht. Der Wirkungsgrad der Rekuperation ist jedoch konstruktionsbedingt klein und liegt etwa bei 25%. Die Anforderungen an die Konstruktion und die Standfestigkeit gegenläufig rotierender, aneinander anliegender Cerium-Ringe -Wärmeübergang, Wärmeabstrahlung und mechanischer Aufwand- sind gross.

Ähnliche Probleme, wie sie oben beschrieben sind, ergeben sich auch in anderen Gebieten des Stands der Technik, wenn eine Prozesseinheit auf verschiedenen Temperaturen betrieben werden soll, und die bei der Kühlung entnommene Wärme rekuperiert werden soll.

Eine verbesserte Rekuperation von Wärme in einem Prozesssystem mit einer zwischen einer oberen und einer unteren Temperatur betreibbaren Prozesseinheit ist in der WO 2016/162839 A1 beschrieben.

Die Erfindung gemäss der WO 2016/162839 A1 betrifft ein Prozesssystem und ein Verfahren zu dessen Betrieb mit einer zwischen einer oberen und einer unteren Temperatur betreibbaren Prozesseinheit, wobei ein erster und ein zweiter Wärmespeicher durch eine Leitungsanordnung für ein Wärme transportierendes Medium betriebsfähig miteinander verbunden sind, und wobei die Prozesseinheit in einem ersten Abschnitt der Leitungsanordnung zwischen dem ersten und dem zweiten Wärmespeicher angeordnet ist. Dadurch lässt sich die Wärme für die Kühlung der Prozesseinheit von der oberen Temperatur zur unteren Temperatur effizient rekuperieren. Zudem können bei der Verwendung von geschichteten Wärmespeichern alle Schaltorgane des Prozesssystems auf der kalten Seite der Wärmespeicher angeordnet werden, während auf der Warmen Seite nur Verbindungsleitungen vorgesehen werden müssen. Bevorzugt wird das Prozesssystem zyklisch betrieben, mit zyklisch umzuschaltender Strömungsrichtung für das Wärme transportierende Fluid.

Weitere Vorrichtungen und Verfahren gemäß dem Stand der Technik sind aus US 2011/0100611 A1 und US 2005/0126170 A1 bekannt.

Der Erfindung liegt deshalb die Aufgabe zugrunde, ein Prozesssystem mit einer zwischen einer oberen und einer unteren Temperatur betreibbaren Prozesseinheit dahingehend weiterzubilden, dass Wärme unter Verwendung eines vereinfachten und kostengünstigen Prozessystems besser rekuperiert werden kann. Das Prozesssystem soll dabei unter anderem auch für Temperaturen über 1000 K verwendbar sein, so dass beispielsweise als Synthesegas hergestellt werden kann.

Diese Aufgabe wird durch die Merkmale der Ansprüche 1 und 7 gelöst. Dadurch, dass mehrere Prozesseinheiten vorgesehen sind, kann das insgesamt benötigte Volumen an Wärmespeichern pro Prozesseinheit gesenkt werden.

Bevorzugte Ausführungsformen der vorliegenden Erfindung besitzen die Merkmale der abhängigen Ansprüche 2 bis 6.

Im Folgenden wird die Erfindung anhand von Figuren beispielhaft erläutert. Gleiche Gegenstände sind in den Figuren grundsätzlich mit gleichen Bezugszeichen bezeichnet. Es zeigt:
- Fig. 1: eine schematische Darstellung einer einfachen Prozessgruppe für ein Prozesssystem mit einer Reihenschaltung eines Wärmespeichers, einer Prozesseinheit und eines weiteren Wärmespeichers,
- Fig. 2: einen Temperaturverlauf in der Prozesseinheit,
- Fig. 3: eine Ausführungsform eines geschichteten Wärmespeichers mit Diagrammen über die in ihm herrschende Temperaturverteilung im Betrieb,
- Fig. 4: eine Ausführungsform einer einfachen Prozessgruppe, bestehend aus einer Prozesseinheit, die zwischen zwei geschichteten Wärmespeichern angeordnet ist, mit Diagrammen über die im Prozesssystem während dem Betrieb herrschende Temperaturverteilung,
- Fig. 5: die Ausführungsform der einfachen Prozessgruppe von Figur 4 mit Diagrammen über die in der Gruppe herrschende Temperaturverteilung in einer alternativen Betriebsform,
- Fig. 6: eine schematische Darstellung einer Ausführungsform einer einfachen Prozessgruppe mit einer Prozesseinheit, mit einem dritten Wärmespeicher für externe Wärme,
- Fig. 7a: bis 7d die einfache Prozessgruppe von Figur 6 in vier verschiedenen Schaltzuständen,
- Fig. 8a: eine schematische Darstellung eines Prozesssystems mit vier einfachen Prozessgruppen, die parallel geschaltet sind,
- Fig. 8b: das Prozesssystem von Figur 8a in einem ersten Schaltzustand,
- Fig. 8c: das Prozesssystem von Figur 8b in einem zweiten Schaltzustand,
- Fig. 9: eine erfindungsgemäße Prozessgruppe,
- Fig. 10: ein Prozesssystem in der Art desjenigen von Figur 8, das mit einer alternativen Temperaturverteilung betrieben wird, und
- Fig. 11: eine weitere erfindungsgemäße Prozessgruppe.

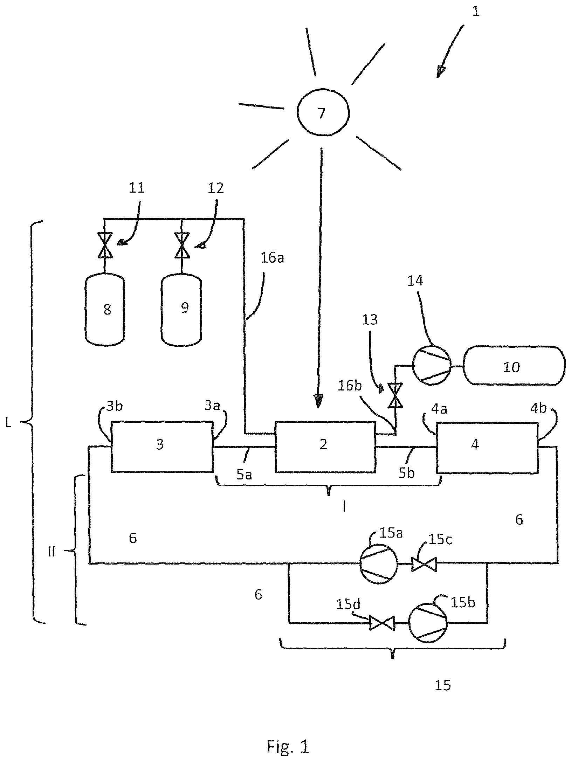

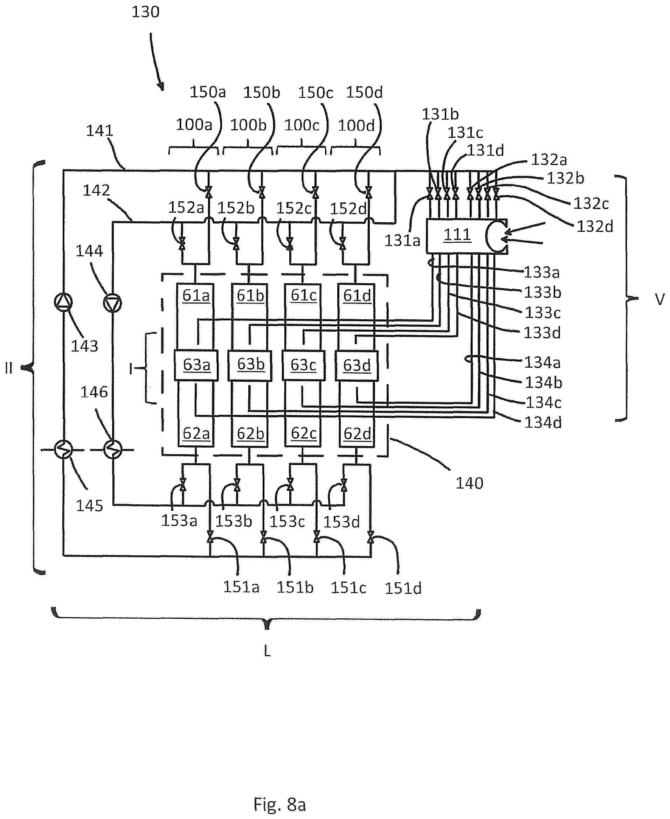

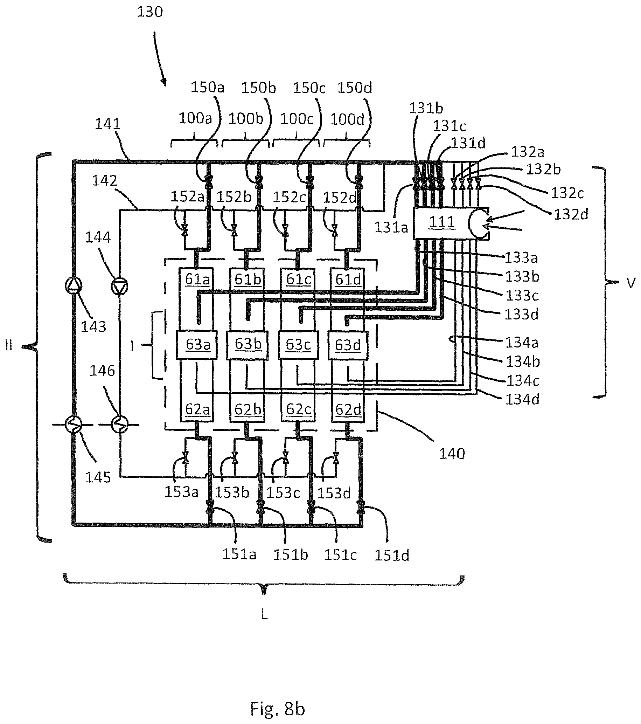

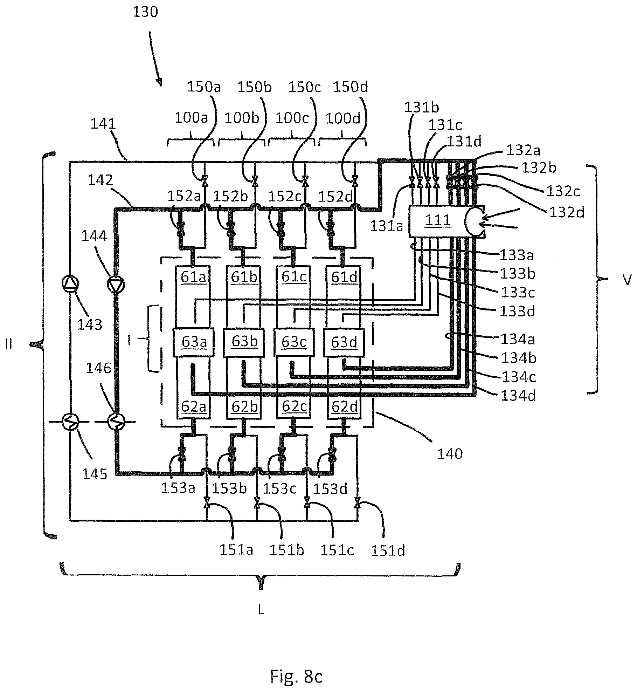

Fig. 1 zeigt eine einfache Prozessgruppe 1 für ein Prozesssystem, das seinerseits aus aus mehreren einfachen Prozessgruppen besteht, beispielsweise vier Prozessgruppen 100a bis 100d gemäss Figur 8.

Die einfache Prozessgruppe 1 besitzt eine zwischen einer oberen und einer unteren Temperatur betreibbaren Prozesseinheit 2, wobei ein erster 3 und ein zweiter Wärmespeicher 4 durch eine Leitungsanordnung L für ein Wärme transportierendes Medium betriebsfähig miteinander verbunden sind, und wobei die Prozesseinheit 2 in einem ersten Abschnitt I der Leitungsanordnung zwischen dem ersten 3 und dem zweiten Wärmespeicher 4 angeordnet ist. Dadurch besitzt jeder der Wärmespeicher 3, 4 ein der Prozesseinheit 2 zugewandtes Ende 3a, 4a und ein dieser abgewandtes Ende 3b, 4b sowie der erste Abschnitt I der Leitungsanordnung die Leitungsabschnitte 5a, 5b, welche die Wärmespeicher 3, 4 mit der Prozesseinheit 2 verbinden.

In der gezeigten Ausführungsform der Erfindung ist die Prozesseinheit 2 als Cerium-Reaktor ausgebildet, der für die in der ETH Dissertation No. 21864 beschriebenen Reaktionen geeignet ist (andere Reaktoren sind natürlich ebenfalls erfindungsgemäss). Dazu ist der Cerium-Reaktor eingangsseitig via eine Leitung 16a über ein Ventil 11 mit einem CO₂-Tank 8 und über ein Ventil 12 mit einem H₂O-Tank 9 verbunden und ausgangsseitig via eine Leitung 16b über ein Ventil 13 und eine Pumpe 14 mit einem Syngas-Tank 10, in welchem ein Gasgemisch hauptsächlich bestehend aus CO und H₂ als Endprodukte gesammelt wird.

Weiter ist ersichtlich, dass der erste 3 und der zweite Wärmespeicher 4 auf der jeweiligen, der Prozesseinheit 2 abgewandten Seite 3b, 4b mittels einem zweiten Abschnitt II der Leitungsanordnung L über deren Leitung 6 verbunden sind. Durch die beiden Abschnitte I und II der Leitungsanordnung L ergibt sich ein Kreislauf des in dieser fliessenden Wärme transportierenden Mediums, welches beispielsweise Argon sein kann, das auch für den Wärmetransport bei hohen Temperaturen geeignet ist.

Eine Pumpenanordnung 15 erlaubt, die Strömungsrichtung des Wärme transportierenden Mediums in beiden Richtungen des Kreislaufs aufrecht zu erhalten und diese bei Bedarf umzukehren. Die Pumpenanordnung 15 ist hier der Einfachheit halber mit zwei Pumpen 15a und 15b dargestellt, die über Ventile 15c und 15c in den Kreislauf geschaltet oder von diesem abgekoppelt werden können. Natürlich kann der Fachmann im konkreten Fall die Pumpenanordnung 15 den Bedürfnissen entsprechend auslegen.

An dieser Stelle sei angemerkt, dass in einer weiteren, nicht dargestellten Ausführungsform der Leitungsabschnitt II auch weggelassen werden kann. Beispielsweise sind dann die Wärmespeicher 3, 4 an ihren der Prozesseinheit 2 abgewandten Seiten 3b, 4b offen, d.h. mit der Umgebung verbunden, so dass das Wärme transportierende Medium Umgebungsluft sein kann, welche durch die Wärmespeicher 3, 4, die Prozesseinheit 2 und damit durch den Leitungsabschnitt I strömt. Der Fachmann wird hier ebenfalls nach dem konkreten Fall (Ausbildung der Prozesseinheit für einen beliebigen industriellen Prozess mit der entsprechenden oberen und unteren Temperatur) den dargestellten geschlossenen Kreislauf oder eine offene Anordnung wählen. Schliesslich ist es möglich, an den abgewandten Seiten der Prozesseinheit 2 an Stelle des Leitungsabschnitts II je Tanks für das Wärme transportierende Medium vorzusehen, so dass dann ein anderes Medium als Umgebungsluft einsetzbar ist. Diese Abwandlungen sind sinngemäss für alle Ausführungsformen der vorliegenden Erfindung möglich.

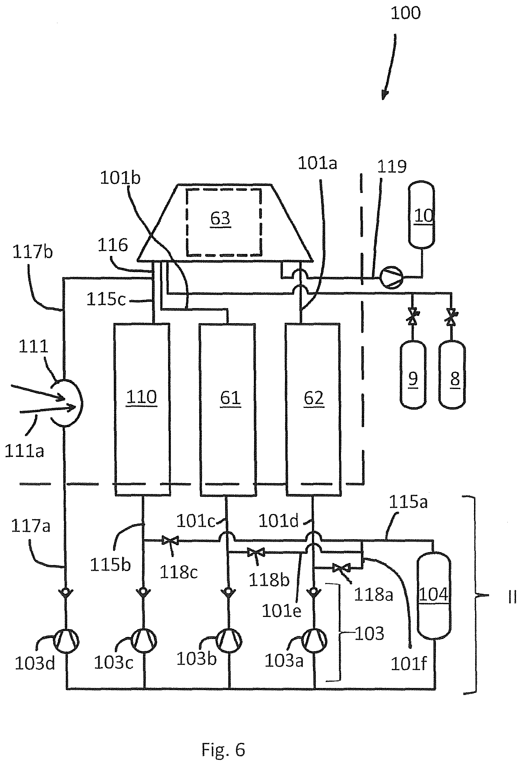

Wie oben erwähnt ist die Prozesseinheit 2 in der in der Figur gezeigten Ausführungsform als Cerium-Reaktor ausgebildet, der hier zyklisch mit einer unteren Temperatur im Bereich von beispielsweise 1300 °K und einer oberen Temperatur im Bereich von beispielsweise 1800 °K betrieben wird (auch hier kann der Fachmann im konkreten Fall alle Parameter entsprechend dem gewählten Prozess leicht bestimmen). Entsprechend muss der Reaktor fortlaufend erwärmt und dann wieder gekühlt werden. Erfindungsgemäss wird bei der Kühlung des Reaktors aus diesem abtransportierte Wärme vorbestimmt in einem der Wärmespeicher 3, 4 gespeichert und zur nachfolgenden (Wieder)Erwärmung eingesetzt, somit rekuperiert. Ein Wirkungsgrad von 100% ist nicht möglich, mit der Folge, dass dem Reaktor bei der Erwärmung in einem oberen Temperaturbereich bis zur oberen Temperatur (hier 1800 °K) Wärme von aussen zugeführt werden muss, beispielsweise durch die Sonne 7 (oder auch durch andere Wärmequellen), welche die Prozesseinheit 2 (hier den Cerium-Reaktor) beleuchtet, oder auch mittelbar über einen weiteren, zur Entlastung der Figur hier nicht dargestellten Wärmespeicher, der seinerseits durch Sonnenenergie (oder durch anders gewonnene Wärme) beladen wird (s. dazu unten, Figur 6). Somit ist hier bei der gezeigten Ausführungsform die Prozesseinheit 2 als ein von der Sonne 7 beleuchteter, mit Ceroxid (CeO2) gefüllter Solarreaktor ausgebildet.

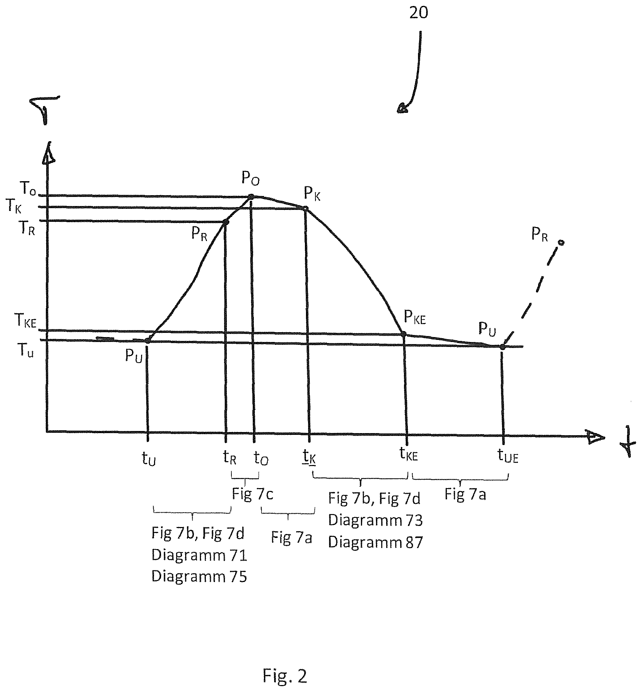

Figur 2 zeigt qualitativ ein Diagramm mit einem Temperaturverlauf in der in den dargestellten Ausführungsformen als Cerium-Reaktor ausgebildeten Prozesseinheit 2 (Figur 1), deren Betriebstemperatur zwischen der unteren Temperatur Tu (hier 1300 °K) und der oberen Temperatur To (hier 1800 °K) wechselt.

Zur Zeit t_{U} beginnt, abgesehen von einem Startvorgang, die Erwärmung des sich auf der unteren Temperatur T_{U} befindenden Reaktors durch rekuperierte Wärme aus den Wärmespeichern 3, 4 (Figur 1). Dadurch steigt die Reaktortemperatur auf T_{R} (die durch die Rekuperation erreichbare Temperatur) an, welche zur Zeit t_{R} erreicht ist. Für die weitere Erwärmung auf To (erreicht zur Zeit to) wird zusätzliche Wärme benötigt, die extern zugeführt werden muss, wie oben erwähnt beispielsweise durch die Beleuchtung des Reaktors durch die Sonne oder auch durch Wärmezufuhr aus einer weiteren, externen Wärmequelle. Die Temperaturkurve läuft damit durch die Punkte P_{U}, P_{R} und P_{O}, wobei der Wirkungsgrad der Rekuperation durch das Verhältnis der Flächen unter den Kurvenabschnitten Pᵤ bis P_{R} und P_{R} bis Pₒ gegeben ist.

Während der Erwärmung des Reaktors von Tu auf To wird das Cerium reduziert, O₂ wird frei und laufend durch eine zur Entlastung von Figur 1 nicht dargestellte Leitung aus dem Reaktor abgeführt. Nach dem Erreichen von Tₒ sind allenfalls noch Spuren von O₂ im Reaktor vorhanden, der während der kurzen Verweilzeit im oberen Temperaturbereich durch Wärmeverluste leicht auf die Temperatur T_{K}, dem Beginn der Kühlung des Reaktors, abkühlt. Die dem Reaktor bis zum Ende der Abkühlung auf die Temperatur T_{KE} zur Zeit t_{KE} entnommene Wärme wird in den Wärmespeichern 3, 4 gespeichert. Sobald der Reaktor die Temperatur T_{KE} erreicht hat, wird durch die Leitung 16 (Figur 1) O₂ und H₂O (vorzugsweise dampfförmig) in den Reaktor eingespiesen, wobei durch Re-Oxidation des Ceriums das Synthesegas gebildet und über die Leitung 16b (Figur 1) in den Syngas-Tank geführt wird. Während der Re-Oxidation kühlt der Reaktor weiter leicht ab auf die Temperatur Tu, die zur Zeit t_{UE} erreicht ist.

Danach kann der Zyklus neu beginnen. Für die Wärmespeicher 3,4 gilt dabei, dass ihre Betriebstemperatur T_{B}, d.h. die maximale Temperatur der in ihnen gespeicherten Wärme, zwischen T_{K} und T_{R} liegt, da zwischen dem Wärme tauschenden Medium und dem Reaktor bzw. den Wärmespeichern eine gewisse Temperaturdifferenz unvermeidlich ist.

Gemäss Figur 1 erfolgt die Abkühlung des Reaktors, indem kälteres Wärme transportierendes Medium beispielsweise aus dem ersten Wärmespeicher 3 über den Leitungsabschnitt 5a in den Reaktor (Prozesseinheit 2) geführt, dort erwärmt und über den Leitungsabschnitt 5b weiter in den zweiten Wärmespeicher4 geführt wird, welcher dadurch beladen wird und bei umgekehrter Strömungsrichtung Wärme für die Erwärmung des Reaktors abgeben kann, was zyklisch immer wieder neu ablaufen kann.

Ein besonders günstiger Wirkungsgrad der Rekuperation lässt sich erreichen, wenn gemäss einer Ausführungsform der erste 3 und der zweite Wärmespeicher 4 als geschichtete Wärmespeicher ausgebildet sind, d.h., Wärmespeicher, die mit einer definierten Temperaturverteilung betrieben werden können, um so erfindungsgemäss auf einfache Weise einen besonders hohen Wirkungsgrad und eine einfache, auch kostengünstige Bauform zu realisieren.

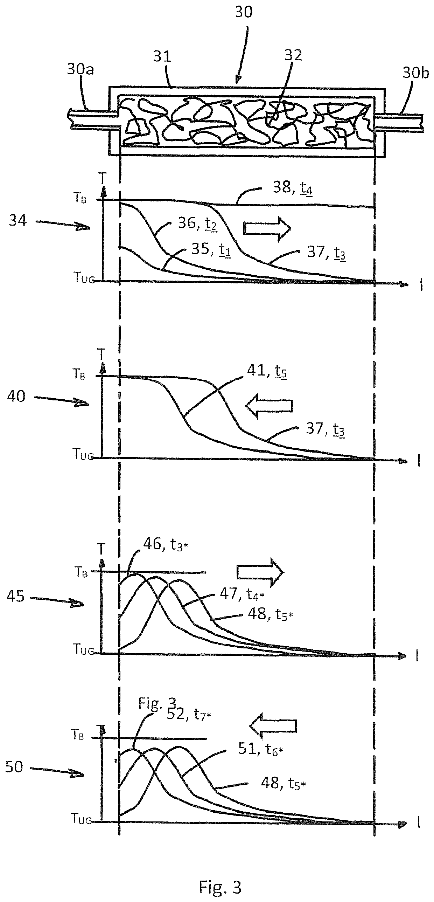

Figur 3 zeigt schematisch eine bevorzugte Ausführungsform eines geschichteten Wärmespeichers 30, also einen Wärmespeicher, der im Betrieb eine Temperaturschichtung mit einem vorbestimmten Temperaturprofil ausbilden kann, wie dies nachstehend beschrieben ist. Der hier gezeigte Wärmespeicher 30 weist im Wesentlichen eine langestreckte, isolierende Ummantelung 31 und eine Wärme speichernde Füllung 32 aus Schüttgut wie etwa Kies oder beispielsweise feineres bzw. gröberes Gestein (oder auch andere geeignete Materialien) auf. An seinen Enden münden Leitungen 30a und 30b für ein Wärme transportierendes Medium, hier ein Gas wie Umgebungsluft oder beispielsweise auch, im Fall hoher Betriebstemperaturen, Argon. Das Gas bzw. Argon strömt durch die im Schüttgut vorhandenen Zwischenräume längs durch den Wärmespeicher 30 und gibt so Wärme an das Schüttgut ab oder nimmt Wärme von ihm auf, je nachdem, ob der Wärmespeicher 30 mit Wärme beladen oder entladen werden soll.

Weiter zeigt Figur 3 Diagramme 34, 40,45 und 50 mit je nach aktuellem Betriebszustand verschiedenen Temperaturverteilungen über die Länge des Wärmespeichers 30, wobei das Temperaturintervall von einer Umgebungstemperatur T_{UG} bis zu einer Betriebstemperatur T_{B} reicht. Dargestellt sind die Betriebszustände bei verschiedener Strömungsrichtung des Gases bzw. Argon, einmal von der Leitung 30a zur Leitung 30b, d.h. nach rechts, und dann umgekehrt von der Leitung 30b zur Leitung 30a, d.h. nach links, entsprechend der in den Diagrammen eingezeichneten Pfeilrichtung.

Diagramm 34 zeigt die Temperaturverteilung des sich zuerst auf der Umgebungstemperatur T_{UG} befindenden Wärmespeichers 30 während der Beladung mit Wärme, wofür er von einem Gas mit einer Betriebstemperatur T_{B} nach rechts, in Pfeilrichtung, durchströmt wird.

Ersichtlich sind vier Temperaturverteilungskurven 35 bis 38 entsprechend der fortschreitenden Beladungszeiten t₁ bis t₄. Zu Beginn der Beladung heizt sich das am Eingang des Wärmespeichers 30 sich befindende Schüttgut 32 auf, wodurch das Gas an Temperatur verliert, so dass die nachfolgenden Partien des Schüttguts 32 entsprechend weniger und die später folgenden Partien des Schüttguts 32 auf Grund des steten Temperaturverlusts des Gases noch weniger aufgeheizt werden. Es ergibt sich zur Zeit t₁ eine in Strömungsrichtung stufenartig abfallende Temperaturverteilung gemäss der Kurve 35. Durch die weiter andauernde Beladung entsteht die stufenartige Temperaturverteilung gemäss der Kurve 36 (Zeit t₂), d.h. die Stufe gewinnt an Höhe mit der steigenden Temperatur des Schüttguts 32 am Eingang des Wärmespeichers 30, wobei sich die Stufe nur wenig in Strömungsrichtung verschiebt. Schliesslich hat das Schüttgut zur Zeit t₃ eingangsseitig die Betriebstemperatur T_{B} des Gases erreicht, so dass bei weiterer Beladung die Stufe in Strömungsrichtung durch das Schüttgut 32 läuft, s. die Kurve 37 zur Zeit t₄. Es ist mit anderen Worten so, dass im Speicher während der Beladung eine Temperaturstufe oder -rampe entsteht, die sich zu Beginn der Beladung aufbaut (Kurven 35 und 36) und sich dann während der weiteren Beladung in Stömungsrichtung verschiebt (Kurve 37), bis sie das andere Ende des Wärmespeichers 30 erreicht und durch dieses gewissermassen hindurchgewandert ist, so dass der zur Zeit t₄ voll beladene Wärmespeicher 30 eine Temperaturverteilung gemäss der Kurve 38 auf dem Niveau der Betriebstemperatr T_{B} aufweist. Es sei angemerkt, dass das mit der Betriebstemperatr T_{B} einströmende Gas den Wärmespeicher auf der unteren Umgebungstemperatur T_{UG} verlässt bis die Stufe dessen Ausgang (hier bei der Leitung 30b) erreicht.

Figur 3 zeigt im Diagramm 40 die Temperaturverteilung, wenn zur Zeit t₃ die Beladung gestoppt und danach der Wärmespeicher 30 entladen wird, indem in umgekehrter Strömungsrichtung ein Gas auf der Umgebungstemperatur T_{UG} von der Leitung 30b her durch den Wärmespeicher 30 hindurchgeführt wird. Die Beladung wird, wie erwähnt, gestoppt zur Zeit t₃, die Wärmeverteilung entspricht damit der Kurve 37. Zur Zeit t₄ hat sich die Temperaturstufe nach links verschoben, die Wärmeverteilung entspricht der Kurve 41. Es sei angemerkt, dass das mit der Umgebungstemperatur T_{UG} einströmende Gas den Wärmespeicher auf der Betriebstemperatr T_{B} verlässt, bis die Stufe dessen Ausgang (hier bei der Leitung 30a) erreicht.

Figur 3 zeigt im Digramm 45 die Temperaturverteilung im Wärmespeicher 30, wenn bei erst teilweiser Beladung (aber immer noch in Strömungsrichtung nach rechts, also von der Leitung 30a zur Leitung 30b, s. die Pfeilrichtung) die Temperatur des einströmenden Gases von T_{B} aus abfällt, beispielsweise auf T_{UG}, hier zur Zeit t₂ von Diagramm 34, d.h. nachdem eine Temperaturverteilung gemäss der Kurve 37 von Diagramm 40 vorliegt.

Das eingangsseitige Schüttgut erwärmt damit das mit T_{UG} einströmende Gas auf die Betriebstemperatur T_{B} und kühlt sich dabei etwas ab, wobei aber das nun auf T_{B} erwärmte Gas nach rechts weiter fliesst und den unmittelbar dahinter liegenden Bereich des Schüttguts 32 entsprechend auf T_{B} erwärmt, dabei aber Wärme verliert, so dass ein noch weiter hinter liegender Bereich des Schüttguts 32 immer noch, aber auf eine tiefere Temperatur, erwärmt wird, und so fort, was zur Zeit t_{3*} eine Temperaturverteilung gemäss der Kurve 46 ergibt. Das nach wie vor mit der Temperatur T_{UG} einströmende Gas kühlt das eingangsseitige Schüttgut 32 weiter ab, nimmt aber dessen Wärme auf und transportiert sie in Strömungsrichtung weiter - es entsteht zur Zeit t_{4*} die Temperaturverteilung gemäss der Kurve 47 und bei fortdauernd einströmendem Gas auf der Temperatur T_{UG} zur Zeit t_{5*} die Temperaturverteilung gemäss der Kurve 48. Es ist mit anderen Worten so, dass sich die Temperaturverteilung nicht mehr als Stufe, sondern als Welle ausbildet, die in Strömungsrichtung durch den Wärmespeicher 30 hindurchläuft. Es sei angemerkt, dass bei diesem Betriebszustand das Gas das mit der unteren Temperatur T_{UG} ein- und ausströmt, während sich die Welle ausbildet und in Strömungsrichtung durch den Wärmespeicher 30 läuft, bei fortschreitender Zeit so lange, bis die Welle den Ausgang bei der Leitung 30b erreicht, wobei erst dann eine Entladung des Wärmespeichers 30 einsetzt, die so lange dauert, bis die Welle vollständig durch die Leitung 30b "hindurch" gelaufen ist.

Hervorgehoben sei, dass sich Wellen verschiedenster Form ausbilden lassen, beispielsweise je nachdem, wie die in den Wärmespeicher einströmende Temperatur geändert wird. Nachstehend wird für alle diese möglichen Wellenformen einfach der Begriff "Welle" verwendet.

Figur 3 zeigt im Diagramm 50 die Temperaturverteilung im Wärmespeicher 30, wenn im Moment der Temperaturverteilung gemäss der Kurve 48 (Diagramm 40) zur Zeit t₅∗ die Strömungsrichtung umgekehrt wird, so dass das Gas dann (nach wie vor auf der unteren Temperatur T_{UG}) nun von der Leitung 30b zur Leitung 30a nach links fliesst, s. die Pfeilrichtung.

Als Ausgangslage im Moment der Umkehrung der Strömungsrichtung existiert, wie erwähnt, die Temperaturverteilung gemäss Kurve 48 zur Zeit t₅∗, wobei aber nun die Welle der umgekehrten Strömungsrichtung entsprechend nach links wandert, hin zur Leitung 30a. Es folgt, eine Zeitspanne nach der Umkehrung der Strömungsrichtung, die Temperaturverteilung gemäss der Kurve 51 zur Zeit t₆∗ und danach diejenige gemäss der Kurve 52 zur Zeit t₇∗. Es sei angemerkt, dass während der im Diagramm 50 gezeigten Entladung des Wärmespeichers 30 das Gas auf der Umgebungstemperatur T_{UG} einströmt und zuerst ebenfalls auf der Umgebungstemperatur T_{UG} ausströmt, solange, bis die vorangehende Temperaturflanke der Welle die Leitung 30a erreicht hat, wobei sich dann der ansteigenden Flanke der Welle entsprechend die Temperatur bis auf die Betriebstemperatr T_{B} erhöht und dann der nachfolgenden, absteigenden Flanke entsprechend wieder abfällt, bis der Wärmespeicher 30 vollständig entladen ist.

Der Wärmespeicher 30 besitzt im geeigneten Betrieb, d.h. im Betrieb mit nur teilweiser Beladung auch bei fortlaufender Durchströmung durch das Wärme transportierende Gas eine warme Seite und eine kalte Seite, s. die Diagramme 34 und 40 von Figur 3, wobei die kalte Seite hier im Wesentlichen auf der Umgebungstemperatur T_{UG} verbleibt, obschon die warme Seite die Betriebstemperatr T_{B} erreicht. Dies gilt ebenfalls für den Betrieb mit einer Welle gemäss den Diagrammen 45 und 50, wenn die Welle nur soweit in den Wärmespeicher 30 hinein verschoben wird, dass die warme Seite des Wärmespeichers noch nicht auf die untere Temperatur gefallen ist (beispielsweise bis zur Wärmeverteilung nach der Kurve 47 in Diagramm 45).

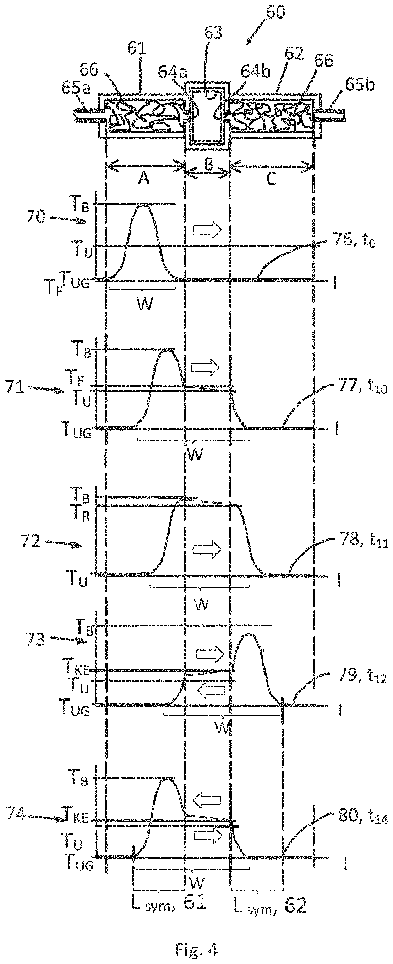

Figur 4 zeigt eine einfache Prozessgruppe 60 gemäss einer Ausführungsform mit zwei geschichteten Wärmespeichern 61, 62 die gemäss Figur 3 ausgebildet sind, damit ein Wärme speicherndes Schüttgut 66 enthalten. Zwischen dem ersten Wärmespeichern 61 und dem zweiten Wärmespeicher 62 ist eine nur gestrichelt angedeutete, hier als Cerium-Reaktor 63 ausgebildete Prozesseinheit angeordnet, wobei die Leitungsabschnitte 64a und 64b eines ersten Abschnitts I der Leitungsanordnung L (Figur 1) ersichtlich sind, welche den Cerium-Reaktor 63 mit den Wärmespeichern 61,62 betriebsfähig verbindet. Weiter dargestellt sind die Mündungen 65a und 65b der zur Entlastung der Figur nicht dargestellten Leitung 6 des zweiten Abschnitts II der Leitungsanordnung L (Figur 1), welche den Kreislauf des Wärme transportierenden Mediums (hier wiederum Argon) ermöglichen, in beiden Strömungsrichtungen, nämlich nach rechts von der Mündung 65a zur Mündung 65b und umgekehrt nach links von der Mündung 65b zur Mündung 65a.

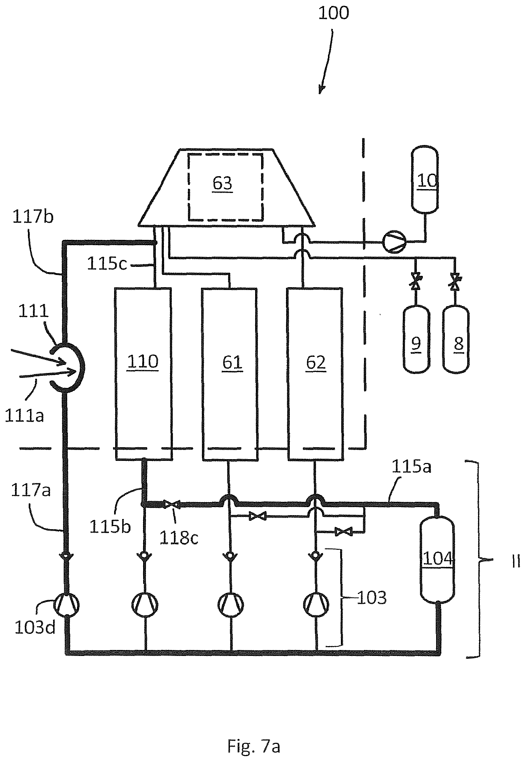

Durch den Betrieb der einfachen Prozessgruppe 60 wird nun der Cerium-Reaktor 63 gemäss Figur 2 zyklisch zwischen einer oberen Temperatur Tₒ und einer unteren Temperatur T_{U} hin- und her gebracht, wobei in den Diagrammen 70 bis 74 der Wärmetausch zwischen dem ersten 61 und zweiten Wärmespeicher 62 und dem Reaktor 63 gezeigt ist, aber zur Verdeutlichung der Wechselwirkung zwischen den Wärmespeichern vorerst ohne die externe Wärmezufuhr zwischen der Rekuperationstemperatur T_{R} und der oberen Temperatur To (s. das Diagramm 20, Figur 2) sondern ausgehend von der zwischen T_{R} und Tₒ liegenden Betriebstemperatur T_{B} der Wärmespeicher 61,62. Im Hinblick auf die externe Wärmezufuhr s. unten, zu den Figuren 6 und 7a bis 7d.

Die Diagramme 70 bis 74 zeigen Temperaturverteilungskurven 76 bis 80 von verschiedenen Betriebszuständen der Anordnung aus dem Cerium-Reaktor 63 mit dem ersten 61 und dem zweiten Wärmespeicher 62, wobei die Abschnitte A, B und C jeweils den Bereich bzw. die Länge in Durchströmrichtung des Wärme transportierenden Mediums des ersten Wärmespeichers 61, des Cerium-Reaktors 63 und des zweiten Wärmespeichers 62 anzeigen.

Im Diagramm 70 zeigt die Temperaturverteilungskurve 76 nach einem ersten Teil eines Startvorgangs der einfachen Prozessgruppe 60 zur Zeit to. Der erste Wärmespeicher 61 ist so mit Wärme beladen, dass eine Temperaturwelle W mit einer Spitzentemperatur T_{B} vorliegt, wobei die Flanken der Welle W auf die Umgebungstemperatur T_{UG}, hier beispielsweise 300 ⁰K, abfallen. Der Cerium-Reaktor 63 und der zweite Wärmespeicher 62 befinden sich noch auf die Umgebungstemperatur T_{UG}. Für den zweiten Teil des Startvorgangs strömt Argon auf Umgebungstemperatur T_{UG} von der Mündung 65a nach rechts durch den ersten Wärmespeicher 61, den Cerium-Reaktor 63 und den Wärmespeicher 62 in die Mündung 65b, s. die Pfeilrichtung in Diagramm 70, mit der Folge, dass sich die Welle W in Strömungsrichtung nach rechts bewegt, wie dies zum Diagramm 45, Figur 3 beschrieben ist.

Diagramm 71 zeigt die Temperaturverteilungskurve 77 zur Zeit t₁₀, wobei sich die Temperaturwelle W in Strömungsrichtung so weit nach rechts verschoben hat, dass sie mit der vorangehenden Flanke an den Cerium-Reaktor 63 angestossen und durch diesen teilweise hindurchgelaufen ist, d.h. das Argon hat den Cerium-Reaktor 63 mit einer ansteigenden, zwischen T_{UG} und T_{B} liegenden Temperatur T_{F} der Flanke durchströmt und diesen entsprechend erwärmt.

Dadurch, dass die Temperaturwelle W von T_{UG} aus mit ansteigender Flankentemperatur T_{F} in den Cerium-Reaktor 63 eindringt, erwärmt sie diesen laufend, so dass die Temperaturdifferenz von T_{F} und derjenigen des Reaktors 63 stets klein bleibt. Natürlich verliert dadurch das Argon etwas an Wärme, s. den Temperaturabfall der Temperaturverteilungskurve 71 im Abschnitt B, wonach das Argon aus dem Cerium-Reaktor 63 mit einer unter T_{F} liegenden Temperatur austritt. Der zweite Wärmespeicher 62 wird schliesslich durch das eintretende Argon erwärmt, so dass die Temperaturverteilungskurve 77 im Abschnitt C eine Flanke aufweist, s. dazu die Beschreibung zu Figur 3, insbesondere Diagramm 34, Kurve 35. Es ergibt sich, dass die im Wärmespeicher 61 gespeicherte Wärme zur Erwärmung des Reaktors 63 genutzt wird, aber auch zur Beladung des Wärmespeichers 62 dient.

Es ergibt sich weiter, dass die durch den Cerium-Reaktor 63 hindurchwandernde Welle W diesen gewissermassen "nicht sieht" (mit Ausnahme des Temperaturabfalls aufgrund des Wärmetauschs des Argons mit dem Reaktor 63), aber natürlich um die Länge des Reaktors 63 (Abschnitt B) auseinandergerissen wird, wie dies die Temperaturverteilungskurve 77 zeigt.

Zusammenfassend ist es so, dass der Startvorgang abgeschlossen ist, sobald die Temperaturverteilung der Temperaturverteilungskurve 77 entspricht: der Reaktor 63 befindet sich auf Tu, wobei der erste Wärmespeicher 61 derart mit einer Welle W beladen ist, dass der Reaktor 63 durch diese auf T_{B} gebracht und anschliessend wieder auf Tu gekühlt werden kann. Der Reaktor 63 befindet sich mit anderen Worten im Punkt Pu des Diagramms 20 von Figur 2.

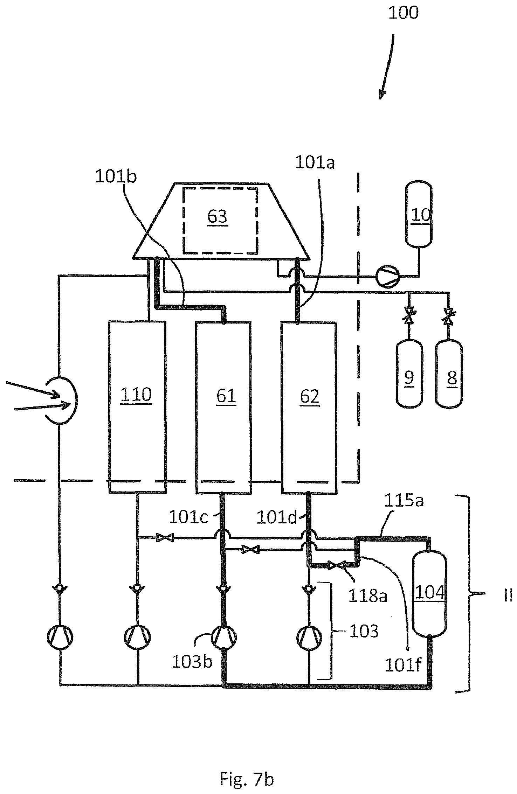

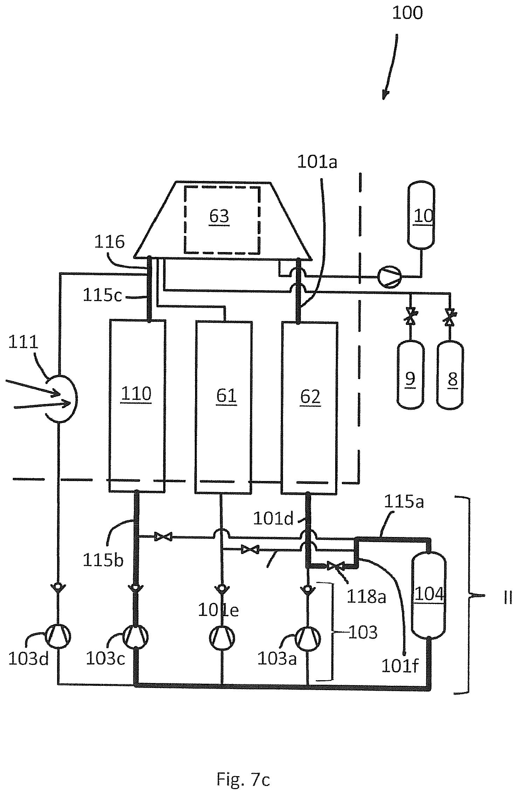

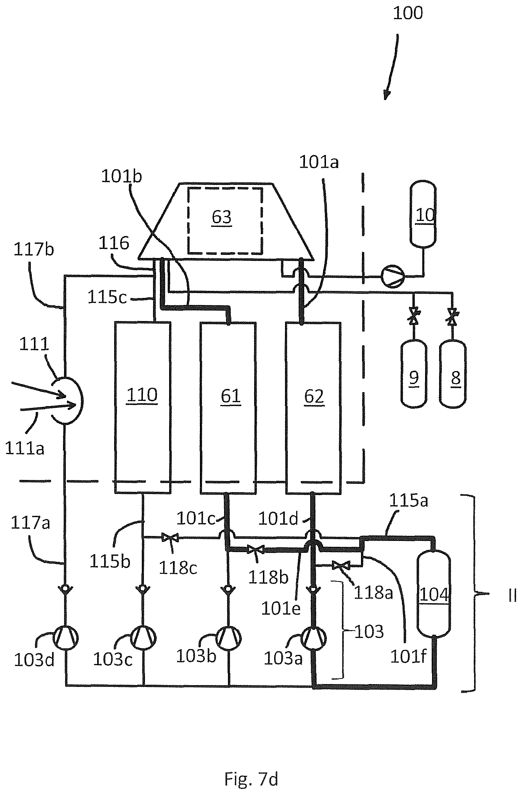

Diagramm 72 zeigt die Temperaturverteilungskurve 78 später, zur Zeit t₁₁, wobei die Welle W soweit in den Cerium-Reaktor 63 eingewandert ist, dass dieser von Argon mit der oberen Temperatur T_{B} durchströmt wird. Der Cerium-Reaktor ist damit auf eine Temperatur T_{R} (Figur 2) nahe der oberen Temperatur Tₒ gebracht worden und befindet sich im Punkt P_{R} von Diagramm 20, Figur 2. Gemäss der Beschreibung zu den Figuren 1 und 2 wird der Cerium-Reaktor 63 danach bevorzugt durch die weitere bzw. externe Wärme von Sonneneinstrahlung, oder Wärme aus einer anderen Wärmequelle, auf Tₒ (d.h. zum Punkt Pₒ im Diagramm 20) gebracht, s. dazu die Beschreibung unten zu den Figuren 6 und 7.

Diagramm 73 zeigt die Temperaturverteilungskurve 79 zur Zeit t₁₂, wobei die Welle W zwischen der Zeit t₁₁ und t₁₂ weiter durch den Cerium-Reaktor 63 hindurch gewandert ist, so dass nun ihre nachfolgende, fallenden Flanke diesen durchläuft und der Kamm der Welle W in den zweiten Wärmespeicher 62 eingewandert ist. Solange die nachfolgende Flanke der Welle W durch ihn hindurchläuft, gibt der Cerium-Reaktor 63 laufend Wärme an das Argon ab, da dieses der fallenden Flanke entsprechend trotz dem laufenden Wärmeverlust des Reaktors 63 stets kühler ist als der ihr gegenüber verzögert Wärme verlierende Cerium-Reaktor.

Wiederum ist Differenz der aktuellen Temperatur des Argons und des Reaktors 63 klein. Zur Zeit t₁₂ befindet sich der Reaktor 63 im Punkt P_{KE} von Diagramm 20, Figur 2. Für die Re-Oxidation des Ceriums, und der damit verbundenen Abkühlung des Reaktors 63 auf Tu (Punkt Pu im Diagramm 20, Figur 2) kann die Strömung des Argon gestoppt werden.

Danach erfolgt die Umschaltung der Strömungsrichtung nach links in Richtung des unteren Pfeils, d.h. von der Leitung 65b zur Leitung 65a, worauf sich die Welle W nach links bewegt und den Reaktor 63 beim Durchgang durch die vorangehende, ansteigende Flanke wiederum erwärmt und anschliessend durch die nachfolgende, abfallende Flanke abkühlt.

Diagramm 74 zeigt die Temperaturverteilungskurve 80 zur Zeit t₁₄, wobei die Welle W soweit durch den Cerium-Reaktor 63 hindurchgelaufen ist, dass dieser nach der Erwärmung auf T_{R} (und durch externe Wärme auf Tₒ, s. Diagramm 20, Figur 2) wieder auf T_{KE} gekühlt und die entsprechende Wärme im Wärmespeicher 61 gespeichert ist.

Zusammenfassend ist es so, dass nach einem Startvorgang gemäss Diagramm 70 die Prozessgruppe 60 eine Temperaturverteilung nach Diagramm 71 aufweist, die Welle W dann in einer Strömungsrichtung (hier: nach rechts) durch den Reaktor 63 hindurchgeschickt wird, so dass die Temperaturverteilung gemäss Diagramm 73 vorliegt, und von dort aus die Welle W dann in der anderen Strömungsrichtung (hier: nach links)durch den Cerium-Reaktor 63 zurückgeschickt wird, bis die Temperaturverteilung gemäss Diagramm 74 vorliegt, welche den Ausgangspunkt für einen neuen Zyklus bildet, d.h. wieder in der einen Strömungsrichtung zum Zustand nach Diagramm 73 und dann zurück in der anderen Strömungsrichtung zum Zustand nach Diagramm 74, und so fort, so lange, wie der Prozess laufen soll. Ausgehend von der Mitte des Reaktors 73 bewegt sich die Welle W in symmetrisch gelegene Endpositionen in den Wärmespeichern 61 und 62. Nach dem Startvorgang erstreckt sich die Welle W über die Länge L_{SYM} vom Cerium-Reaktor 63 her in die beiden Wärmespeicher 61,62 bzw. Abschnitte A und C hinein, s Diagramm 74 in Verbindung mit Diagramm 73. Das bedeutet, dass im laufenden Betrieb die beiden Wärmespeicher an ihren äusseren, bei den Mündungen 65a und 65b gelegenen Abschnitte stets auf der Umgebungstemperatur T_{UG} und damit kalt bleiben, während im Inneren des Prozesssystems ein zyklischer Wärmetausch zwischen dem Reaktor 63 und den Wärmespeichern 61,62 durch die gemäss den Diagrammen 73,74 fortlaufend hin- und her schwingende Welle W stattfindet.

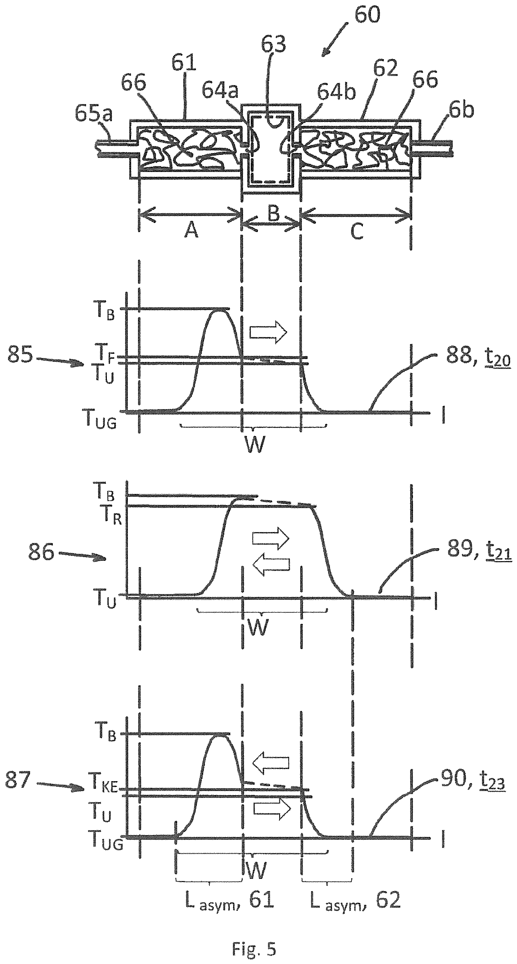

Figur 5 zeigt eine weitere Ausführungsform, bei welcher der Prozess nicht symmetrisch (Figur 4), sondern asymmetrisch ausgeführt wird, indem die durch den Reaktor 63 nach rechts hindurchlaufende Welle W bereits bei der Temperaturverteilung gemäss Diagramm 72 (Figur 4) gestoppt wird. Zur Erläuterung zeigt Figur 5 solch eine Sequenz mit den Diagrammen 85 bis 87 die den Diagrammen 71, 72 und 74 von Figur 4 entsprechen, d.h. deren Temperaturverteilungskurven 88 bis 90 (zu den Zeiten_t₂₀ bis t₂₃) gleich sind wie die Temperaturverteilungskurven 77, 78 und 80. Geändert ist jedoch wie erwähnt der Zeitpunkt der Umschaltung der Strömungsrichtung, der erfolgt, wenn gemäss Diagramm 86 die Temperaturverteilung nach der Kurve 89 vorliegt.

Damit erfolgt die Erwärmung des Reaktors 63 ausgehend vom Zustand gemäss Diagramm 85 bis zu demjenigen vom Diagramm 86 und die Abkühlung nach der Umschaltung der Strömung ausgehend vom Zustand gemäss Diagramm 86 bis zu demjenigen nach Diagramm 87, worauf der Zyklus neu beginnt. Entsprechend dringt die hin- und her schwingende Welle W weniger weit in den zweiten Wärmespeicher 62 ein, als dies beim ersten Wärmespeicher 61 der Fall ist, womit ihre Endpositionen nicht mehr symmetrisch, sondern asymmetrisch liegen. Die entsprechenden Längen L_{ASYM} sind in Diagramm 87 in Verbindung mit Diagramm 86 eingetragen. Es folgt, dass der zweite Wärmespeicher 62 vorteilhaft kürzer ausgebildet werden kann, als dies bei der Ausführungsform gemäss Figur 4 der Fall ist, während dem natürlich die beiden äusseren Enden der Wärmespeicher 61,62 bei den Mündungen 65a und 65b ebenfalls stets auf der Umgebungstemperatur T_{UG} und damit kalt bleiben.

Die Wärmeverluste bei dem anhand der Figuren 4 und 5 beschriebenen Wärmetausch sind gering, der Wirkungsgrad der so erreichten Rekuperation von Wärme hoch. Weiter kann der Fachmann in Verbindung mit der Beschreibung zu Figur 2 die Schaltzeiten der Strömung für den konkreten Fall im Hinblick auf einen beliebigen Prozess mit zyklisch wechselnder Temperatur ohne Weiteres festlegen. Insbesondere kann der Fachmann durch die Steilheit der Flanken der Welle W und deren Geschwindigkeit durch den Reaktor 63 hindurch die Temperaturdifferenz bestimmen, welcher der Reaktor bei der Erwärmung bzw. Kühlung ausgesetzt ist, was umgekehrt auch ermöglicht, diesen nur für vorbestimmt kleine Temperaturdifferenzen auszulegen bzw.

Bei der in den Figuren 4 und 5 beschriebenen Ausführungsform der einfachen Prozessgruppe 60 besitzen zusammenfassend der erste 61 und der zweiter Wärmespeicher 62 eine Wärme speichernde Füllung aus Schüttgut 66, wobei bevorzugt das Wärme transportierende Medium ein Gas ist, besonders bevorzugt Argon. Weiter ist es so, dass die Wärmespeicher 61 und 62 an ihrer vom Reaktor 63 abgewandten Seite (bei den Mündungen 65a und 65b) im Betrieb stets auf der Umgebungstemperatur T_{UG} laufen, während ihre dem Reaktor 63 zugewandten Seiten bei den Leitungsabschnitten 64a und 64b (nach dem Startvorgang) stets auf erhöhten Temperaturen zwischen T_{U} und T_{B}, der Spitzentemperatur der (hin- und her schwingenden) Welle W.

Entsprechend weisen der erste Wärmespeicher (61) und der zweite Wärmespeicher (62) im Betrieb jeweils eine kalte Seite auf, wobei bevorzugt ein zweiter Abschnitt (II) der Leitungsanordnung (L) vorgesehen ist, der diese kalten Seiten miteinander verbindet. Die kalten Seiten können auch bei weggelassenem zweitem Abschnitt II mit der Umgebung oder auch mit anderen Systemen verbunden sein, wie dies bei einer zu Figur 1 beschriebenen Ausführungsform der Fall ist. An dieser Stelle sei angefügt, dass im realen Betrieb sich die kalten Seiten über die Zeit leicht erwärmen können. Der Fachmann kann dann für den konkreten Fall eine Kühleinheit für das Wärme transportierende Medium im zweiten Abschnitt II der Leitungsanordnung L vorsehen, wenn dies notwendig sein sollte, oder auch das Prozesssystem so auslegen, dass es bei den im Solarbetrieb auftretenden Unterbrüchen (Nacht) auskühlen kann.

In den Figuren 4 und 5 ist weiter ersichtlich, dass die Wärmespeicher 61,62 über die Leitungen 64a und 64b miteinander verbunden sind (Abschnitt I der Leitungsanordnung L), während gemäss Figur 1 alle notwendigen Schaltorgane für den Betrieb des Prozesssystems wie beispielsweise die Pumpenanordnung 15 im zweiten Abschnitt II der Leitungsanordnung L vorgesehen werden können - mit dem Vorteil, dass die Schaltorgane auf der kalten Seite angeordnet sind, damit frei von hohen Temperaturen, und entsprechend konstruktiv einfach ausgelegt werden können. Auf der warmen bzw. heissen Seite, die je nach Anwendung auf Temperaturen über 1300 ⁰K oder 2300 ⁰K oder mehr liegen kann, genügen einfache Rohrverbindungen wie z.B. Keramikrohre. Es folgt, dass bevorzugt dass im zweiten Abschnitt II der Leitungsanordnung L Schaltorgane für den Betrieb des ersten I und des zweiten Abschnitts II der Leitungsanordnung angeordnet sind. Besonders bevorzugt ist dabei der erste Leitungsabschnitt I frei von Schaltorganen für den Betrieb der einfachen Prozessgruppe. Die Wärmespeicher 60, 61 müssen mit einer minimalen Länge ausgebildet werden, damit ihre kalte Seite im Betrieb die Umgebungstemperatur T_{UG} nicht übersteigt. Grafisch ist diese minimale Länge in den Figuren 4 und 5 durch für jeden Wärmespeicher 60,61 durch eine ihm zugeordnete Länge L_{SYM} oder L_{ASYM} dargestellt - es handelt sich um diejenigen Strecken in den Abschnitten A und C, die die Welle W benötigt, um hin- und her zu wandern. Die Längen L_{SYM} und L_{ASYM} des Wärmespeichers 61 bei den Ausführungsformen gemäss den Figuren 4 und 5 sind gleich gross, während die Längen L_{ASYM} des Wärmespeichers 62 in Figur 5 aufgrund der weniger weit in den Wärmespeicher 62 eindringenden Welle W kleiner ist als L_{SYM} des Wärmespeichers 62 in Figur 4.

Es ergibt sich, dass der Fachmann die Länge der Wärmespeicher in der Ausführungsform gemäss Figur 4 auf minimal L_{SYM} bemessen kann, und bei einer Ausführungsform gemäss Figur 5 die Länge des einen Wärmespeichers (hier des zweiten Wärmespeichers 62) noch einmal auf L_{ASYM} kürzen kann, was eine günstigere Herstellung erlaubt.

An dieser Stelle sei noch hervorgehoben, dass die kalte Seite der Wärmespeicher für die meisten Anwendungen auf der Umgebungstemperatur T_{UG} liegt. Je nach dem konkreten Fall kann es aber angezeigt sein, dass die kalten Seiten, d.h. die von der Prozesseinheit abgewandten Seiten der Wärmespeicher im Betrieb auf einer höheren Temperatur liegen, beispielsweise bis 400 ⁰K oder noch darüber - wenn etwa das Wärme transportierende Fluid noch in an dem Prozesssystem angeschlossenen, anderen Systemen umläuft oder seinerseits im Wärmetausch mit solchen anderen Systemen steht. Vorliegend wird aber stets der Begriff "kalte Seite" zur Unterscheidung von der warmen Seite der Wärmespeicher verwendet. Der Fachmann kann für den Betrieb mit einer kalten Seite, die über der Umgebungstemperatur T_{UG} liegt, einen spezifisch konzipierten Startvorgang vorsehen - das in den Figuren 3 bis 5 beschriebene, erfindungsgemässe Arbeitsprinzip ändert dadurch nicht.

Die oben beschriebenen Verhältnisse insbesondere betreffend der warmen und der kalten Seite der Wärmespeicher gelten nicht nur für eine stand alone betriebene einfache Prozessgruppe, sondern auch für Prozesssysteme mit mehreren Prozessgruppen und für Prozesssystem mit kombinierten Prozessgruppen.

Aus der vorangegangenen Beschreibung zu den Figuren 1 bis 5 und auch nach den in den Figuren 6 bis 10 beschriebenen Ausführungsformen ergibt sich weiter ein Verfahren zum zyklischen Erwärmen und Kühlen einer oder mehrerer Prozesseinheiten 2, die zwischen einer oberen und einer unteren Temperatur betreibbar sind, wobei jeweils eine Prozesseinheit betriebsfähig zwischen einem ersten 3 und einem zweiten Wärmespeicher 4 geschaltet ist,
- wobei der erste 3 und der zweite 4 Wärmespeicher in einem beladenem Zustand Wärme im Bereich der oberen Temperatur abgeben und die Temperatur während einer Entladung der unteren Temperatur zustrebt,
- wobei der erste 3 und der zweite 4 Wärmespeicher während einer Beladung zuerst mit Wärme im Bereich der unteren Temperatur und dann im Bereich der oberen Temperatur beladbar sind, und
- wobei durch einen zyklischen Wechsel der Strömungsrichtung eines durch den ersten 3 und den zweiten Wärmespeicher 3 - und damit durch die Prozesseinheit 2 - strömenden Wärme transportierenden Mediums diese Prozesseinheit 2 im Wechsel zwischen der oberen Temperatur und der unteren Temperatur hin- und hergebracht wird.

Dabei wird bevorzugt eine Strömungsrichtung vor der zyklischen Umkehrung beibehalten, bis die eine oder mehreren Prozesseinheit 2 von der unteren Temperatur aus auf eine Rekuperationstemperatur erwärmt und nachfolgend wieder auf die untere Temperatur abgekühlt sind (s. die Ausführungsform gemäss Figur 4).

Weiter bevorzugt werden die Wärmespeicher mit einer wellenförmigen Temperaturschichtung betrieben, die eine Welle W ausbildet. Besonders bevorzugt wird der Wechsel der Strömungsrichtung derart getaktet, dass die Welle im fortlaufenden, fortlaufend im symmetrischen Betrieb hin- und her schwingend in beide Wärmespeicher gleich weit hinein- und wieder hinausläuft. Alternativ kann auch der Wechsel der Strömungsrichtung derart getaktet werden, dass die Welle fortlaufend im asymmetrischen Betrieb hin- und her schwingend in den einen Wärmespeicher weniger weit als in den anderen Wärmespeicher, bevorzugt bis zur ihrer Temperaturspitze, hinein und wieder hinausläuft.

Die durch die erfindungsgemäss erreichbaren Vorteile mit einer kalten (und warmen) Seite der Wärmespeicher werden insbesondere realisiert, wenn bevorzugt im Betrieb die Welle W die von der Prozesseinheit abgewandten Seiten der Wärmespeicher nur teilweise erreicht, derart, dass diese Seiten unter einer vorbestimmten Temperatur bleiben, bevorzugt jedoch nicht erreicht, derart, dass diese Seiten kalt bleiben.

Schliesslich kann der Fachmann auch die Strömung derart auf die Prozesseinheit abstimmen, dass eine aktuelle Temperaturdifferenz zwischen dem durch diese durchströmenden Wärme transportierenden Medium und der Prozesseinheit einen vorbestimmten Wert nicht überschreitet.

Bei all den gezeigten Ausführungsformen kann die Prozesseinheit als direkt oder indirekt beleuchteter Solarreaktor ausgebildet sein. Wie oben erwähnt, kann jedoch auch Wärme aus einer beliebigen anderen Wärmequelle benutzt werden, um beim Erwärmen der Prozesseinheit deren Temperatur von T_{R} auf T_{O} zu erhöhen.

Figur 6 zeigt ein Schema einer isoliert betrachteten einfachen Prozessgruppe 100, bei welcher die externe Wärme, hier beispielsweise Solarenergie, zwischen den Punkten P_{R} und P_{O} im Diagramm 20 von Figur 2 indirekt, d.h. ohne direkte Beleuchtung der Prozesseinheit 2 (Figur 1) durch die Sonne eingebracht wird. Wie erwähnt, kann jedoch an Stelle von Solarenergie auch aus einer anderen Quelle stammende Energie verwendet werden.

Dargestellt ist eine wiederum als Cerium-Reaktor 63 ausgebildeten Prozesseinheit, in welchen die für den Transport des Wärme transportierenden Mediums und aller Reaktionspartner benötigten Leitungen betriebsfähig münden. Ersichtlich sind Leitungen 101a und 101b eines erster Abschnitts I einer Leitungsanordnung L, sowie ein zweiter Abschnitt II der Leitungsanordnung L mit einer Pumpenanordnung 103 mit Pumpen 103a und 103b, die je mit einem Rückschlagventil versehen sind, sowie einem Tank 104 für das Wärme transportierende Medium, hier wiederum Argon. Ebenfalls ersichtlich sind der CO₂-Tank 8, der H₂O-Tank 9 und der Syngas-Tank 10 (s. dazu die Beschreibung zu Figur 1). Ein erster Wärmespeicher 61 und ein zweiter Wärmespeicher 62 sind entsprechend der in der Figur 4 gezeigten Ausführungsform ausgebildet. Soweit, und abgesehen von der direkten Beleuchtung des Reaktors 63 durch die Sonne 7 (Figur 1) entspricht die einfache Prozessgruppe 100 derjenigen von Figur 1.

Hinzu kommen nun aber noch ein dritter Wärmespeicher 110 und ein Solar-Reciever 111 für Sonnenstrahlen 111a (bzw. eine andere, geeignete Wärmequelle), die beide in den Kreislauf für das Wärme transportierende Medium geschaltet werden können, wobei der Receiver 111 und der Wärmespeicher 110 ausgebildet sind, Wärme mit wenigstens der oberen Temperatur T_{O} zu erzeugen bzw. zu speichern. Bevorzugt ist der dritte Wärmespeicher 110 als geschichteter Wärmespeicher gemäss Figur 3 ausgebildet und wird entsprechend Diagramm 40 von Figur 3 beladen und entladen. Er ist weiter ist im zweiten Abschnitt der Leitungsanordnung L über die Leitungen 115a und 115b (dort via Pumpe 103c) mit dem Argontank 104 und über die Leitung 115c mit einem als Leitung 116 ausgebildeten Zufluss zum Reaktor 63 verbunden. Der Solar-Receiver 111 ist seinerseits über die Leitung 117a (via Pumpe 103d) mit dem Argontank 104 und über die Leitung 117b wahlweise schaltbar mit einerseits der Leitung 116 und anderseits der Leitung 115c verbunden, so dass durch ihn erwärmtes Wärme transportierendes Medium (hier: Argon) entweder direkt in den Reaktor 63 oder in den dritten Wärmespeicher 110 gefördert werden kann, angetrieben durch die Pumpe 103d in der Leitung 117a. Ventile 118a bis 118c bestimmen mit den Leitungen 101c bis 101f und zusammen mit den den Pumpen 103a bis 103d zugeordneten Rückschlagventilen die Strömung und den Weg des Wärme transportierenden Mediums im Prozesssystem 100.

Hervorgehoben sei, dass die in der Figur eingezeichnete, gestrichelte Linie in der Prozessgruppe 100 die Grenze bildet zwischen ihrer warmen Seite, die den Reaktor 63 einschliesst, und ihrer kalten Seite, in welcher alle Schaltorgane wie Ventile und die Pumpenanordnung 103 angeordnet sind. Dabei wird noch einmal die vorteilhafte Anordnung deutlich, welche erlaubt, alle Schaltorgane einfach und kostengünstig im kalten Bereich (bevorzugt Umgebungstemperatur T_{UG}) anzuordnen, während im warmen Bereich, bei Temperaturen zwischen T_{R} und T_{O}, die 1300 ⁰K oder 2300 ⁰K übersteigen können, nur Rohrleitungen für das Wärme transportierende Medium und im Reaktor reagierenden bzw. erzeugten Stoffe vorgesehen werden müssen, die ebenfalls einfach und kostengünstig beispielsweise aus Keramik bestehen können.

Die Leitung 117b bildet einen dritten Abschnitt III und die Leitung 115c einen vierten Abschnitt IV der Leitungsanordnung L.

Damit ergibt sich, dass gemäss der gezeigten Ausführungsform im ersten Abschnitt I der Leitungsanordnung L in Strömungsrichtung vor der Prozesseinheit ein Zufluss 116 für das Wärme transportierende Medium im Bereich der oberen Temperatur angeordnet ist, weiter bevorzugt ein solarer Receiver zur Erwärmung des Wärme transportierenden Mediums vorgesehen ist, wobei ein dritter Abschnitt der Leitungsanordnung den solaren Receiver mit dem Zufluss verbindet, und schliesslich besonders bevorzugt ein dritter Wärmspeicher vorgesehen ist, den ein vierter Abschnitt der Leitungsanordnung mit dem Zufluss verbindet, wobei Wärme aus dem solaren Receiver in diesem dritten Wärmespeicher einspeicherbar ist.

Die Ausführungsform gemäss Figur 6 zeigt auch, dass für ein beliebiges, Solar betriebenes Prozesssystem der Receiver von der Prozesseinheit (beispielsweise einem Reaktor für chemische Reaktionen oder einer anderen Einheit für die Verwertung von Wärme) entfernt angeordnet werden kann, entweder in direkter Verbindung zu einer Prozesseinheit des Prozesssystems oder mittelbar über einen dem Receiver zugeordneten Wärmespeicher.

Die Figuren 7a bis 7d zeigen, wie die einfache Prozessgruppe 100 für die verschiedenen, in Figur 2 gezeigten Betriebsphasen des Reaktors 63 geschaltet (und auch für die oben beschriebenen Verfahrensschritte betrieben) werden kann, wobei dann die Wärmespeicher 61 und 62 bevorzugt gemäss den Figuren 4 und 5 betrieben werden.

Figur 7a zeigt zeigt einen Schaltzustand der einfachen Prozessgruppe 100 im Zeitraum to bis t_{K} bzw. im Zeitraum t_{KE} bis t_{UE} (siehe Fig. 2, Diagramm 20, mit den Punkten P_{O} bis P_{K} und P_{KE} bis P_{UE}), in welchen die Reduktion des Ceriums abgeschlossen ist bzw. die Re-Oxidation stattfindet und damit hier keine Strömung des Wärme transportierenden Mediums durch den Reaktor 63 vorliegt. In diesen Zeiträumen t_{R} bis t_{O} bzw. im Zeitraum t_{KE} bis t_{UE} kann Wärme aus dem solaren Receiver 111 mittels des Wärme transportierenden Mediums (hier: Argon) in den dritten Wärmespeicher 110 eingespeichert werden. Dafür treibt die Pumpe 103d aus dem Tank 104 stammendes Argon durch den Receiver 111, wo es sich mit Wärme belädt, dann durch die Leitungen 117b und 115c in den Wärmespeicher 110, der dadurch mit Wärme beladen wird, und schliesslich, auf Umgebungstemperatur t_{UG} abgekühlt, wieder in den Tank 104. Die so aktiven Leitungen sind in der Figur fett hervorgehoben.

Fig. 7b zeigt einen Schaltzustand des einfachen Prozesssystems 100 für eine in den Ausführungsformen der Figuren 4 und 5 nach rechts laufende Strömung, d.h. beispielsweise im Zeitraum tu bis t_{R} bzw. zwischen den Punkten P_{U} bis P_{R} (siehe Fig. 2), in welchem der Reaktor 63 durch rekuperierte, d.h. im ersten Wärmespeicher 61 gespeicherte Wärme erwärmt wird. Zu Beginn liegt in den Wärmespeichern 61,62 die Temperaturverteilung gemäss Diagramm 71 von Figur 4 oder auch Diagramm 85 von Figur 5 vor, je nach der Ausführungsform, gemäss welcher das Prozesssystem betrieben wird. Dafür treibt die Pumpe 103b aus dem Tank 104 stammendes Argon durch den Receiver durch den ersten Wärmespeicher 61, wo es sich mit Wärme belädt, dann durch die Leitung 101b in den Reaktor 63 und von diesem durch die Leitung 101a in den zweiten Wärmespeicher 62, der dadurch mit Wärme beladen wird, und schliesslich, auf Umgebungstemperatur t_{UG} abgekühlt, wieder in den Tank 104. Die so aktiven Leitungen sind in der Figur fett hervorgehoben.

Dieser Schaltzustand liegt aber auch vor, wenn im Zeitraum t_{K} bis t_{KE} bzw. zwischen den Punkten P_{K} bis P_{KE} (siehe Fig. 2) dem zu kühlenden Reaktor 63 Wärme entnommen und für die Rekuperation im Wärmespeicher 62 gespeichert wird, wie dies im Diagramm 73 von Figur 4 dargestellt ist. Dann fliesst aus dem Wärmespeicher 61 in seiner Temperatur fallendes Argon durch den Reaktor 63, wo es dessen Wärme aufnimmt und im Wärmespeicher 62 einspeichert.

Fig. 7c zeigt einen Schaltzustand des Prozesssystems 100 im Zeitraum t_{R} bis t_{O} bzw. zwischen den Punkten P_{R} bis P_{O} (siehe Fig. 2), in welchem der Reaktor 63 durch die im dritten Wärmespeicher 110 gespeicherte, externe Wärme (hier aus dem Receiver 111) auf die obere Temperatur To gebracht wird. Wie bereits oben erwähnt, kann der Wärmespeicher 110 auch durch andere Energieformen als Solarenergie beladen werden - auch könnte an Stelle des Receivers 111 eine andere Energiequelle als die Sonne Wärme in das Prozesssystem 100 einbringen.

Dafür treibt die Pumpe 103c aus dem Tank 104 stammendes Argon durch den Wärmespeicher 110, wo es sich mit Wärme belädt, dann durch die Leitungen 115c und 116 in den Reaktor 63 und von diesem durch die Leitung 101a in den Wärmespeicher 62, der dadurch mit Wärme oberhalb von T_{R} beladen wird, und schliesslich, auf Umgebungstemperatur t_{UG} abgekühlt, wieder in den Tank 104. Die so aktiven Leitungen sind in der Figur fett hervorgehoben.

Alternativ kann auch die Pumpe 103d zugeschaltet werden, so dass gleichzeitig durch den Receiver 111 und den dritten Wärmespeicher 110 erwärmtes Wärme transportierendes Fluid durch die Leitung 116 in den Reaktor strömt. Ebenso kann auch nur die Pumpe 103d aktiviert werden, nicht aber die Pumpe 103c, so dass der Schaltzustand des Prozesssystems 100 demjenigen von Figur 1 mit der direkten Beleuchtung des Reaktors durch die Sonne entspricht.

Hervorgehoben sei, dass in Diagramm 73 von Figur 4 bzw. in Diagramm 86 von Figur 5 die Spitzentemperatur der Welle W ohne diese Beladung mit Wärme oberhalb von T_{R} dargestellt ist, da in diese Diagrammen die Verschiebung der Welle W als Ergebnis des Aufbaus des dort gezeigten Prozessgruppe 60 diskutiert wird. Bei einem Schaltzustand gemäss Figur 7c eines erfindungsgemässen Prozesssystems erhöht sich aber der Wirkungsgrad noch einmal durch die so rekuperierte externe Wärme. Angemerkt sei auch, dass sich dadurch der geringe, stetige Abfall der Spitzentemperatur der wandernden Welle in den Diagrammen 45 und 50 von Figur 3 vermeiden lässt, so dass die Temperaturen T_{R} und T_{O} tatsächlich über einen beliebig langen Betriebszeitraum konstant bleiben können. Der Fachmann kann im konkreten Fall das Prozesssystem 100 leicht entsprechend auslegen.

Fig. 7d zeigt einen Schaltzustand des Prozesssystems 100 für eine in den Ausführungsformen der Figuren 4 und 5 nach links laufende Strömung, d.h. beispielsweise für eine rücklaufende Welle W gemäss Diagramm 73 von Figur 4 im Zeitraum t_{U} bis t_{R} bzw. zwischen den Punkten P_{U} bis P_{R} (siehe Fig. 2), in welchem der Reaktor 63 durch rekuperierte, d.h. im Unterschied zu Fig. 7b nicht im ersten Wärmespeicher 61, sondern im zweiten Wärmespeicher 62 gespeicherte Wärme erwärmt wird. Die rücklaufende Welle W bewirkt aber auch die Kühlung des Reaktors 73 im Zeitraum t_{K} bis t_{KE} bzw. zwischen den Punkten P_{K} bis P_{KE} (siehe Fig. 2), wobei dem zu kühlenden Reaktor 63 Wärme entnommen und für die Rekuperation nun im Wärmespeicher 61 gespeichert wird.

Dafür treibt die Pumpe 103a aus dem Tank 104 stammendes Argon durch den Wärmespeicher 62, dann durch die Leitung 101a in den Reaktor 63 und von diesem durch die Leitung 101b in den Wärmespeicher 61, und schliesslich, auf Umgebungstemperatur t_{UG} abgekühlt, wieder in den Tank 104. Die so aktiven Leitungen sind in der Figur fett hervorgehoben.

Figur 8a zeigt ein Prozesssystem 130, bestehend aus vier einfachen Prozessgruppen 100a bis 100d, die alle analog zur Prozessgruppe 1 von Figur 1 ausgebildet und parallel geschaltet sind. Zur Entlastung der Figur sind die zu jeder Prozessgruppe 100a bis 100d gehörenden Tanks 8 für CO₂, 9 für H₂O und 10 für Syngas weggelassen. Der Fachmann kann im konkreten Fall die entsprechenden Tanks und Leitungen leicht für das Prozesssystem 130 auslegen.

Jede dieser einfachen Prozessgruppen 100a bis 100d weist damit eine als Cerium - Reaktor ausgebildete Prozesseinheit 63a bis 63d mit zwei diese einschliessenden Wärmespeichern 61a bis 61d und 62a bis 62d auf. Die Leitungsanordnung L ist derart ausgebildet, dass jede der Prozessgruppen 100a bis 100d in beiden Richtungen von Wärme transportierendem Fluid durchströmt werden kann, so dass in jeder der Prozessgruppen 100a bis 100d im Inneren ein zyklischer Wärmetausch stattfindet, bei welchem sich eine hin- und her schwingende Welle W ausbildet, wie dies oben anhand der Diagramme 70 bis 74 und 85 bis 87 (d.h. symmetrisch oder asymmetrisch) der Figuren 4 und 5 beschrieben ist. Dabei bildet sich in der Prozessgruppe 100a die Welle Wₐ aus, in der Prozessgruppe 100b die Welle W_{b} und so fort.

Nun ist es bevorzugt so, dass die Wellen Wa bis Wd zu einander phasenversetzt laufen, s. dazu die Beschreibung unten.

Die warme Seite der einfachen Prozessgruppen 100a bis 100d ist durch die gestrichelte Linie 140 abgegrenzt (s. dazu auch Figur 6), ausserhalb der Linie 140 befindet sich die kalte Seite der Prozessgruppen 100a bis 100d mit dem zweiten Abschnitt II der Leitungsanordnung L. Innerhalb der gestrichelten Linie 140 befindet sich die warme Seite mit dem ersten Abschnitt I der Leitungsanordnung L (s. dazu auch die Beschreibung zu Figuren 1 bis 7).

Vorliegend sind die kalten Seiten der Wärmespeicher 61a bis 62d über zwei parallel geführte Leitungen 141,142 verbunden, so dass für jede Strömungsrichtung eine eigene Leitung 141 bzw. 142 zur Verfügung steht. Entsprechend ist in jeder Leitung 141,142 ebenfalls eine eigene Pumpe 143,144 vorgesehen, wobei deren Strömungsrichtungen entgegengesetzt sind. Die Leitungen 141, 142 verbinden die kalten Seiten der Wärmespeicher 61a bis 62d auch untereinander, also gruppenübergreifend, um die parallele Schaltung zu realisieren.

Wärmetauscher 145,146 bilden eine Kühleinheit für das Wärme transportierende Medium (s. dazu die Beschreibung zu Figur 5).

Die Schaltung der Leitungsanordnung L für die phasenverschobene zyklische Durchströmung der Prozessgruppen 100a bis 100d in wechselnder Richtung erfolgt über die die Ventile 150a bis 150d, 151a bis 151d, 152a bis 152d und 153a bis 153d. Rückschlagventile sind zur Entlastung der Figuren 8a bis 8c weggelassen - der Fachmann kann diese nach dem Vorbild der Figuren 7a bis 7d leicht selbst geeignet vorsehen.

Es ergibt sich, dass mehrere einfache Prozessgruppen 100a bis 100d, gebildet jeweils aus einer Prozesseinheit 63a bis 63d und zwei diese zwischen sich einschliessenden Wärmespeichern 61a bis 61d sowie 63a bis 63d, durch die Leitungsanordnung L parallel geschaltet sind, und wobei die Wärmespeicher 61a bis 61d sowie 63a bis 63d im Betrieb eine kalte und eine warme Seite aufweisen, die warmen Seiten der Wärmespeicher jeder Gruppe 100a bis 100d durch die Leitungsanordnung L mit der zugehörigen Prozesseinheit 63a bis 63d und die kalten Seiten mit einander gruppenübergreifend verbunden sind.

In Figur 8a ist eine weitere, bzw. externe Energiequelle 111 ersichtlich, die über die Leitungen 133a bis 133d sowie 134a bis 134d eines Abschnitts V der Leitungsanordnung L mit den Wärmespeichern 61a bis 61d und 62a bis 62d verbunden ist. Durch den Abschnitt V kann somit Wärme transportierendes Fluid, beladen mit Wärme aus der Energiequelle 111, zu jedem der Wärmespeicher 61a bis 62d gebracht werden. Mit dieser Wärme wird beispielsweise in jeder Prozesseinheit 63a bis 63d in deren Zeitintervall t_{R} bis t_{O} deren Betriebstemperatur von T_{R} auf T_{O} gebracht (s. dazu die Beschreibung von Figur 2).

Die Leitungen 133a bis 134d werden über Ventile 131a bis 131d sowie 132a bis 132d geöffnet bzw. geschlossen, so dass die Zufuhr von Wärme zum jeweiligen Wärmespeicher 61a bis 62d gesteuert abläuft. Die Leitungen 133a bis 134d werden bevorzugt von den Leitungen 141,142 gespiesen, so dass die Leitungen 133a bis 134d in den Kreislauf des Wärme transportierenden Fluids eingeschlossen sind.

Eine zur Entlastung der Figur weggelassene Steuerung, die betriebsfähig mit den Ventilen 131a bis 132d sowie Ventile 150a bis 150d, 151a bis 151d, 152a bis 152d und 153a bis 153d verbunden ist, steuert diese Ventile unter anderem so an, wie dies in der nachstehenden Beschreibung zu den Figuren 8b und 8c erwähnt ist.

Figur 8b zeigt den Betriebszustand des Prozesssystems 130, wenn die Prozesseinheiten 63a bis 63d der Prozessgruppen 100a bis 100d mit Wärme transportierendem Fluid durchströmt werden, und zwar von den Wärmespeichern 61a bis 61d her zu den Wärmespeichern 62a bis 62d (in der Zeichnungsebene von oben nach unten). Die Pumpe 143 ist aktiv, die Ventile 150a bis 150d und 151a bis 151d durch die Steuerung geöffnet, so dass sich die fett eingezeichneten (nicht aber die normal gezeichneten) Leitungen des Abschnitts II der Leitungsanordnung L Wärme transportierendes Fluid fördern. Die Wellen Wₐ bis W_{d} laufen somit von den Wärmespeichern 61a bis 61d her auf die Prozesseinheiten 63a bis 63d zu, dringen in diese ein oder, im Fall des symmetrischen Betriebs, verlassend diese wieder, indem sie in die Wärmespeicher 62a bis 62d eindringen.

Es sei hier angemerkt, dass die Ventilpaare 150a, 151a bzw. 150b,151b bis hin zum Paar 150d, 151d individuell geschaltet werden müssen, um den phasenverschobenen Betrieb zu ermöglichen.

Beispielsweise wird das Ventilpaar 150a,151a zuerst und das Paar 150d,151d zuletzt ein- bzw. ausgeschaltet, damit die entsprechenden Wellen Wₐ bis W_{d} phasenverschoben durch ihre Cerium Reaktoren (63a bis 63d) hindurchlaufen.

Die Steuerung öffnet dann in der Zeitperiode t_{R} bis to jeder Prozesseinheit (bzw. in der gezeigten Ausführungsform: jedes Cerium - Reaktors) 63a bis 63d das zugeordnete Ventile 131a bis 131d, so dass sich am Eingang der Prozesseinheiten 63a bis 63d die Temperatur des einströmenden Wärme transportierenden Fluids von T_{R} auf T_{O} erhöht, so lange die jeweilige Welle Wₐ bis W_{d} mit der ansteigenden Flanke in die Prozesseinheit 63a bis 63d einströmt. S. zu dieser Zufuhr von Wärme Figur 2 und die Beschreibung dazu.

Die Öffnung der Ventile 131a bis 131d geschieht natürlich ebenfalls phasenverschoben, entsprechend der Phasenverschiebung der Wellen Wₐ bis W_{d}.

Figur 8c zeigt den Betriebszustand des Prozesssystems 130, wenn die Prozesseinheiten 63a bis 63d der Prozessgruppen 100a bis 100d mit Wärme transportierendem Fluid durchströmt werden, und zwar von den Wärmespeichern 62a bis 62d her zu den Wärmespeichern 61a bis 61d (in der Zeichnungsebene von unten nach oben). Nun ist die Pumpe 144 ist aktiv, die Ventile 153a bis 153d und 152a bis 152d sind offen, so dass die fett eingezeichneten eingezeichneten (nicht aber die normal gezeichneten) Leitungen des Abschnitts II der Leitungsanordnung L Wärme transportierendes Fluid fördern. Die Wellen Wa bis Wa laufen somit auf die Wärmespeicher 61a bis 61d zu oder dringen in diese ein.

Es sei hier angemerkt, dass die Ventilpaare 153a, 152a bzw. 153b,152b bis hin zum Paar 153d,152d individuell geschaltet werden müssen, um den phasenverschobenen Betrieb zu ermöglichen. Beispielsweise wird das Ventilpaar 153a,152a zuerst und das Paar 153d,152d zuletzt ein- bzw. ausgeschaltet, so dass die entsprechenden Wellen Wₐ bis W_{d} phasenverschoben durch ihre Cerium Reaktoren (63a bis 63d) hindurchlaufen.

Die Steuerung öffnet in der Zeitperiode t_{R} bis t_{O} jeder Prozesseinheit (bzw. in der gezeigten Ausführungsform: jedes Cerium - Reaktors) 63a bis 63d das zugeordnete Ventile 132a bis 132d, so dass sich am Eingang der Prozesseinheiten 63a bis 63d die Temperatur des einströmenden Wärme transportierenden Fluids von T_{R} auf T_{O} erhöht, so lange die jeweilige Welle Wₐ bis W_{d} mit der ansteigenden Flanke in die Prozesseinheit 63a bis 63d einströmt. S. zu dieser Zufuhr von Wärme Figur 2 und die Beschreibung dazu.

Die Öffnung der Ventile 132a bis 132d geschieht ebenfalls phasenverschoben, entsprechend der Phasenverschiebung der Wellen Wₐ bis W_{d}.

Eine Periode für eine hin- und her schwingende Welle Wₐ bis W_{d} gemäss der Anordnung von Figur 4 dauert zwei Mal die Zeit t_{halb} = t_{UE} - t_{U}, s. dazu Figur 2. Für die Frequenz f der hin - und her schwingenden Welle Wₐ bis W_{d} folgt, dass f = 1 /2 t_{H} ist. Werden alle Prozessgruppen 100a bis 100d mit der gleichen Frequenz f betrieben (was nicht zwingend notwendig ist) kann der Fachmann für die Zeit, in welcher ein Ventil 133a bis 134d geöffnet ist, 1/8 x 2 t_{H} vorsehen, wobei dann ein ständiger Fluss von Wärme transportierendem Fluid aus der weiteren Energiequelle 111 zu den Wärmespeichern 61a bis 62d stattfindet. Dadurch erübrigt sich ein dritter Wärmespeicher 110, wie dies in der Anordnung gemäss Figur 6 der Fall ist.

Ergibt sich ein durch eine andere Schaltung der Ventile 133a bis 134d ein nicht ständiger Fluss, kann ein kleinerer dritter Wärmespeicher gewählt werden, was immer noch gegenüber der Anordnung von Figur 6 betreffend Erstellungskosten und Unterhaltskosten vorteilhaft ist. Es ist mit anderen Worten so, dass die Parallelschaltung von mehreren Prozessgruppen synergetisch ist, was sich auch mit mehr oder weniger gegenüber den in den Figuren 8a bis 8c gezeigten vier Prozessgruppen 100a bis 100d verwirklichen lässt. Der Fachmann kann im konkreten Fall das Prozesssystem entsprechend auslegen.

Zusammenfassend ist bevorzugt bei mehreren, parallel geschalteten Prozessgruppen eine Steuerung vorgesehen, um in jeder Gruppe eine Temperaturwelle W zyklisch durch deren Prozesseinheit hindurch hin- und her laufen zu lassen, und wobei die Steuerung ausgebildet ist, um die Temperaturwellen der Gruppen mit gleicher Frequenz, aber gegeneinander phasenverschoben, bevorzugt mit im Wesentlichen je gleicher Phasenverschiebung, hin- und her laufen zu lassen.

An dieser Stelle sein noch angemerkt, dass der Fachmann die Auslegung im konkreten Fall so wählen kann, dass einige der Wellen Wₐ bis W_{d} bereits wieder zurücklaufen, während andere Wellen Wₐ bis W_{d} noch vorlaufen, wobei, wie bereits erwähnt, gleiche Frequenz der Wellen W günstig, aber nicht zwingend ist.

Es ergibt sich zusammenfassend dass durch eine Leitungsanordnung (L) Prozessgruppen geschaltet werden, die je eine zwischen zwei zugeordneten Wärmespeichern angeordnete Prozesseinheit aufweisen, und wobei die Prozessgruppen wiederum durch die Leitungsanordnung (L) zueinander parallel geschaltet werden, dabei die Wärmespeicher in jeder Prozessgruppe mit einer wellenförmigen Temperaturschichtung betrieben werden, die eine Welle W ausbildet, welche sich entsprechend einer Strömungsrichtung von Wärme transportierendem Medium durch ihre Prozessgruppe bewegt, dabei weiter ein Wechsel der Strömungsrichtung für jede der parallel geschalteten Prozssgruppen derart getaktet wird, dass die Wellen W der Prozessgruppen fortlaufend hin- und her schwingend durch die Prozesseinheit der Gruppe laufen.

Bevorzugt ist dieses Verfahren zum zyklischen Erwärmen und Kühlen von mehreren Prozesseinheiten, die zwischen einer oberen (TO) und einer unteren Temperatur (TU) betreibbar sind, ausgebildet, wobei wenigstens zwei Prozesseinheiten phasenverschoben erwärmt und wieder gekühlt werden, wobei die Prozesseinheiten aus einem ihnen jeweils zugeordneten Wärmespeicher erwärmt werden und während der Kühlung abgegebene Wärme in einen ihnen zugeordneten Wärmespeicher abgeben. Weiter bevorzugt werden dabei die wenigstens zwei Prozesseinheiten mit der gleichen Frequenz erwärmt und wieder gekühlt. Insbesondere kann die Phasenverschiebung derart ausgebildet werden, dass aus einer weiteren Wärmequelle stammende Wärme in einem im Wesentlichen regelmässigen Takt dieser entnommen und in den Zyklus der Erwärmung und Kühlung der mehreren Prozesseinheiten eingebracht werden kann.

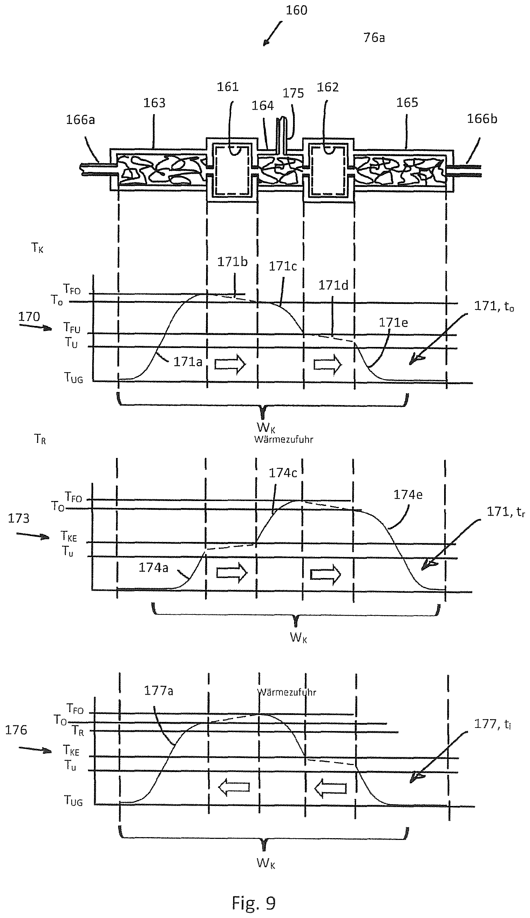

Figur 9 zeigt eine kombinierte Prozessgruppe 160 2. gemäß der vorliegenden Erfindung. Ersichtlich sind eine erste 161 und eine zweite Prozesseinheit 162, die hier beide wiederum als Cerium - Reaktoren ausgebildet sind (wobei auch anders ausgebildete Prozesseinheiten vorgesehen werden können). Weiter ersichtlich sind ein vorderer 163, ein mittlerer 164 und ein hinterer Wärmespeicher 165, welche als geschichtete Wärmespeicher ausgebildet sind, derart, dass in ihnen eine Temperaturverteilung erzeugt werden kann, die eine Temperaturwelle W_{K} ausbildet, s. dazu die Beschreibung zu den Figuren 3 bis 5. Über Leitungsanschlüsse 166a, 166b einer Leitungsanordnung L für Wärme transportierendes Fluid kann dieses der Länge nach durch die Anordnung von abwechselnd in Serie geschalteten Wärmespeichern 162 bis 165 und Prozesseinheiten 161,162 (welche die kombinierte Prozessgruppe bilden) strömen, wobei durch eine zur Entlastung der Figur weggelassene Steuerung die Leitungsanordnung L derart geschaltet werden kann, dass das Fluid die kombinierte Prozessgruppe 160 zyklisch wechselnd vom Leitungsanschluss 166a zum Leitungsanschluss 166b (in der Figur nach rechts) und vom Leitungsanschluss 166b zum Leitungsanschluss 166a (in der Figur nach links) strömt.

Es ergibt sich, dass in der erfindungsgemäßen Ausführungsform die Wärmespeicher für die Aufnahme und die Abgabe von Wärme unter einem wellenförmigen Temperaturverlauf als geschichtete Wärmespeicher ausgebildet sind. Weiter ergibt sich, dass in der Prozessgruppe gemäß der Erfindung wenigstens zwei Prozesseinheiten und wenigstens drei Wärmespeicher vorgesehen sind, die durch die Leitungsanordnung (L) einander abwechselnd in Serie geschaltet sind, derart, dass zwei Prozesseinheiten einen Wärmespeicher zwischen sich einschliessen, wie dies hier für die den Wärmespeicher 164 einschliessenden Prozesseinheiten 161,162 der Fall ist. Zudem ist es bei der in der Figur gezeigten Ausführungsform so, dass die in Serie mit Wärmespeichern geschalteten Prozesseinheiten ihrerseitsje zwischen zwei Wärmespeichern liegen, derart, dass an beiden Enden der kombinierten Prozesseinheit jeweils ein Wärmespeicher liegt.

Diagramm 170 zeigt die Temperaturverteilung in der kombinierten Prozessgruppe 160 nach einem Startvorgang anhand der Temperaturverteilungskurve 171 zur Zeit to. Die Welle W_{K} erstreckt sich vom Eingang des ersten Wärmespeichers 163 bis in die Mitte des dritten Wärmespeichers 165 und besteht aus einer aufsteigenden Flanke 171a im Wärmespeicher 163, einer oberen absteigenden Flanke 171c im Wärmespeicher 164 und einer unteren absteigenden Flanke 171e im Wärmespeicher 165, wo diese auf dessen halber Länge auf Umgebungstemperatur T_{UG} ausläuft. Während dem Startvorgang hat die durch die Prozessgruppe 160 von links nach rechts hindurchlaufende und sich dabei aufbauende Welle W_{K} beide Reaktoren 161,162 erwärmt, den ersten Reaktor 161 auf T_{O}, den zweiten Reaktor 162 auf Tu. Wiederum fällt die Temperatur der Welle W_{K} über die Länge der Reaktoren bzw. Prozesseinheiten 161,162 ab, im Reaktor 161, wo sich der Wellenkamm befindet, von der Temperatur der Flanke T_{FO} auf To, beim Reaktor 162 von der Temperatur der Flanke T_{FU} auf Tu, s. die flach abfallenden Bereiche 171b und 171d der Welle W_{K}.

Durch den Startvorgang lässt sich eine Temperatur der Welle von T_{FO} > To leicht erzeugen - während dem Betrieb der kombinierten Prozessgruppe sind jedoch für Temperaturen > T_{R} die Zufuhr von externer Wärme notwendig wird, analog zum Fall der einfachen Prozessgruppen gemäss den Figuren 1 bis 8d, insbesondere Figuren 8b und 8c, s. dazu auch die Beschreibung zum Diagramm 173 unten.

Die Welle W_{K} befindet sich somit nach dem Startvorgang zur Zeit t_{I} in ihrer linken Endposition. Danach schaltet die Steuerung die Leitungsanordnung L so, dass Wärme transportierendes Fluid gemäss dem im Diagramm 170 eingezeichneten Pfeil nach rechts durch die kombinierte Prozessgruppe 160 strömt, so dass sich die Welle W_{K} nach rechts bewegt.

Diagramm 173 zeigt die Temperaturverteilung in der kombinierten Prozessgruppe 160 anhand der Temperaturverteilungskurve 174 zur Zeit tᵣ, also sobald sich die Welle W_{K} aufgrund der nach rechts laufenden Strömung des Wärme transportierenden Fluids in ihrer rechten Endposition befindet. Die aufsteigende Flanke ist zur Hälfte durch den Reaktor 161 hindurch gelaufen, hat diesen somit von T_{O} auf T_{KE} abgekühlt (s. Figur 2). Dabei befindet sich die untere Hälfte 174a der aufsteigenden Flanke noch im Wärmespeicher 163, und die obere Hälfte 174c der aufsteigenden Flanke bereits im Wärmespeicher 164, während die Flankenhälften durch einen Bereich 174b getrennt sind, der leicht ansteigt, da die kühlende aufsteigende Flanke während dem Durchtritt durch den Reaktor 161 von diesem Wärme übernommen hat. Der Reaktor 161 ist somit durch die Welle W_{K} gekühlt worden, die entsprechende Wärme befindet sich in der Flanke 174c.

Gleichzeitig ist die abfallende Flanke 174e der Welle W_{K} durch den zweiten Reaktor 162 hindurch in den dritten Wärmespeicher 165 gelaufen, so dass sich der Wellenkamm nun im zweiten Reaktor 162 befindet, und diesen auf Grund der oberen Flankentemperatur T_{FO} auf dessen obere Temperatur T_{O} erwärmt hat.

Nun ist es wie bereits erwähnt gemäss Figur 2 so, dass die obere Flankentemperatur T_{FO} der Flanke 174c ohne externe Wärmezufuhr bei der Rekuperationstemperatur T_{R} liegen würde, die unterhalb der oberen Reaktortemperatur To liegt, und damit unterhalb der oberen Flankentemperatur T_{FO}, die notwendig ist, um im Reaktor T_{O} zu erzeugen. Entsprechend wird bevorzugt auch bei der dargestellten kombinieren Prozessgruppe 160 Wärme aus einer externen Quelle 111 zugeführt, wobei diese Wärmezufuhr im Wärmespeicher 164 oder im zweiten Reaktor 162 stattfinden kann. Der Fachmann kann diese Wärmezufuhr anhand der vorliegenden Beschreibung im konkreten Fall leicht konzipieren, so dass vorliegend ein entsprechender fünfter Abschnitt V der Leitungsanordnung L nur durch den Leitungsanschluss 175 zum Wärmespeicher 164 angedeutet ist.

Dabei sei angemerkt, dass diese Wärmezufuhr aus einer externen Wärmequelle 111 grundsätzlich auch direkt in eine der Prozesseinheiten oder in einen oder mehrere der Wärmespeicher erfolgen kann - dies gilt für alle erfindungsgemässen Ausführungsformen.

Es ergibt sich, dass eine Zuleitung für Wärme transportierendes Medium vorgesehen ist, die in eine oder mehrere der Wärmespeicher und/oder Prozesseinheiten mündet, welche ihrerseits mit einer weiteren Wärmequelle, die bevorzugt Wärme mit einer Temperatur von Tₒ oder höher liefert, verbunden ist.

Nachdem die Welle W_{K} zur Zeit tᵣ ihre rechte Endposition erreicht hat, schaltet die Steuerung die Leitungsanordnung L so, dass die Welle W_{K} wieder nach links wandert (wobei auch ein kurzer Zeitabschnitt der Beharrung der Welle W_{K} in ihrer rechten Endposition vorgesehen werden kann).

Diagramm 176 zeigt die Temperaturverteilung in der kombinierten Prozessgruppe 160 anhand der Temperaturverteilungskurve 177 zur Zeit t_{I}, in welcher sich die Welle im Normalbetrieb in ihrer linken Endposition befindet. Der obere Teil 177a der aufsteigenden Flanke hat beim Durchgang durch den ersten Reaktor 161 diesen erwärmt, der obere Teil 177 c der fallenden Flanke beim Durchgang durch den zweiten Reaktor 162 diesen abgekühlt, so dass die Wellenspitze ohne externe Energiezufuhr aus der Wärmequelle 111 die Rekuperationstemperatur T_{R} aufweisen würde. Im Diagramm 176 besitzt die Wellenspitze jedoch die Temperatur T_{FO} , die grösser ist als die obere Temperatur T_{O}, wobei die dazu benötigte Wärme aus der Wärmequelle 111 über den Leitungsanschluss 175 zugeführt worden ist.

Nach dem die Welle ihre linke Endposition erreicht hat, ist ein Zyklus, bestehend aus einer Wanderung nach rechts (Abkühlung des ersten Reaktors 161 und Erwärmung des zweiten Reaktors 162) und einer Wanderung nach links (Erwärmung des ersten Reaktors 161 und Abkühlung des zweiten Reaktors 162) beendet. Dieser Zyklus wird wiederholt, so lange die Reaktoren 161,162 im Betrieb sein sollen.

Zusammenfassend ist es so, dass die Leitungsanordnung (L) einen ersten Schaltzustand, in welchem Wärme transportierendes Medium in einer Richtung durch kombinierte Prozessgruppe hindurch strömt und einen zweiten Schaltzustand besitzt, in welchem Wärme transportierendes Medium in der Gegenrichtung durch die kombinierte Prozessgruppe strömt, wobei eine Steuerung vorgesehen ist, um im Betrieb die Leitungsanordnung (L) zyklisch zwischen dem ersten und dem zweiten Schaltzustand hin- und her zu schalten. Bevorzugt ist dabei weiter die Steuerung ausgebildet, im Betrieb in der kombinierte Prozessgruppe eine Temperaturwelle zyklisch über deren ganze Länge hin- und her laufen zu lassen.

Auch bei der kombinierten Prozessgruppe (wie auch bei der einfachen Prozessgruppe) ergibt sich zusammenfassend ein Verfahren bei welchem für die Kühlung einer Prozesseinheit ein ihr zugeordneter Wärmespeicher entladen wird, dabei Wärme im Bereich der oberen Temperatur (TO) in die Prozesseinheit abgibt, diese Wärme durch die Entladung der unteren Temperatur (TU) zustrebt, und wobei für die Erwärmung einer Prozesseinheit ein ihr zugeordneter Wärmespeicher in diese Wärme im Bereich der unteren Temperatur (TU) abgibt, dabei diese Wärme während der Erwärmung der Prozesseinheit der oberen Temperatur (TO) zustrebt.

Dabei ist weiter das Verfahren im Fall einer kombinierten Prozessgruppe bevorzugt derart ausgebildet, dass durch eine Leitungsanordnung (L) die Prozesseinheiten und die zugeordneten Wärmespeicher einander abwechselnd in Serie geschaltet werden, dabei die Wärmespeicher mit einer wellenförmigen Temperaturschichtung betrieben werden, die eine Welle WK ausbildet, welche sich entsprechend einer Strömungsrichtung von Wärme transportierendem Medium durch die Wärmespeicher und Prozessgruppen bewegt, dabei weiter ein Wechsel der Strömungsrichtung durch die Wärmespeicher und Prozessgruppen hindurch derart getaktet wird, dass die Welle WK fortlaufend hin- und her schwingend durch alle Prozesseinheiten der kombinierten Prozessruppe läuft.

Die kombinierte Prozessgruppe 160 besitzt gegenüber einer einfachen Prozessgruppe erhebliche Vorteile, da auf die Prozesseinheit und damit auf die Produktion bezogen weniger Wärmespeicher benötigt wird und die Steuerung der Leitungsanordnung L vereinfacht ausfällt, so dass die Prozesseinheiten 161,162 effizienter betrieben werden können:
Die minimal notwendige, totale Länge der in der Prozessgruppe 160 verwendeten Wärmespeicher 163,164,165 entspricht fünf Vierteln der Länge der Welle W_{K}, pro Porzesseinheit also fünf Achtel der Länge der Welle W_{K}: Befindet sich die Welle in der linken Endposition, muss der Wärmespeicher 163 die volle aufsteigende Flanke 171 a aufnehmen, s. Diagramm 170. Befindet sich die Welle W_{K} in der rechten Endposition, muss der Wärmespeicher 165 die volle abfallende Flanke 174e aufnehmen können, s. Diagramm 173, wobei eine volle Flanke der halben Länge der Welle W_{K} entspricht. Der Wärmespeicher 164 muss etwa eine halbe Flanke aufnehmen können, s. die Diagramme 170,173 und 176, was einem Viertel der Länge der Welle W_{K} entspricht. Es ergibt sich damit, dass bei einem Prozesssystem mit einer kombinierten Prozessgruppe ein von den Prozesseinheiten eingeschlossener Wärmespeicher bevorzugt eine Länge im Bereich eines Viertels einer Temperaturwelle W aufweistund dass weiter bevorzugt die an den Enden der kombinieren Prozesseinheit liegenden Wärmespeicher eine Länge im Bereich einer halben Temperaturwelle aufweisen.

Die minimal notwendige, totale Länge der in der Prozessgruppe 63 bei asymmetrischem Betrieb verwendeten Wärmespeicher 61,62 entspricht fünf Vierteln der Länge der Welle W_{K}, pro Prozesseinheit also fünf Achtel der Länge der Welle W_{K}. Befindet sich die Welle W in der linken Endposition, muss der Wärmespeicher 61 drei Viertel einer Welle aufnehmen können, s. das Diagramm 85. Befindet sich die Welle W in der rechten Position, muss der Wärmespeicher 62 eine volle Flanke, d.h. die Hälfte der Welle W aufnehmen können, zusammen fünf Viertel für nur eine Prozesseinheit 63.

Mit anderen Worten ist es so, dass durch die Anordnung von Wärmespeichern und Prozesseinheiten in einer kombinierten Prozessgruppe 160, also in einer Anordnung mit zwei Prozesseinheiten, kein Mehrbedarf an Wärmespeicherlänge (und -kapazität) gegenüber einer Anordnung mit nur einer Prozesseinheit entsteht, aber die Produktion verdoppelt ist.

Dies reduziert auch die Komplexität der Leitungsanordnung L, und damit auch der Steuerung, da für zwei Prozesseinheiten immer noch nur zwei kalte Seiten von Wärmespeichern vorliegen, wie dies bei einer Prozesseinheit der Fall ist.

Es sei hier angemerkt, dass die in Zusammenhang mit der einfachen Prozessgruppe beschriebenen Verhältnisse bzw. Vorteile (Figuren 1 bis 7d) auch auf die kombinierte Prozessgruppe gemäss den Figuren 8 bis 11 realisiert werden können. Darunter fallen insbesondere, aber nicht abschliessend, die kalten Seiten der die kombinierte Prozessgruppe begrenzenden Wärmespeicher (die auf T_{ug} oder höher betrieben werden), eine warme, von Schaltorganen freie Zone, symmetrischer oder asymmetrischer Betrieb, eine Parallelschaltung mehrerer kombinierter Prozessgruppen für beispielsweise vereinfachte Zufuhr der weiteren, externen Wärme, Abstimmen der Strömungsgeschwindigkeit für eine vorbestimmte Temperaturdifferenz zum Cerium - Reaktor etc.,etc.

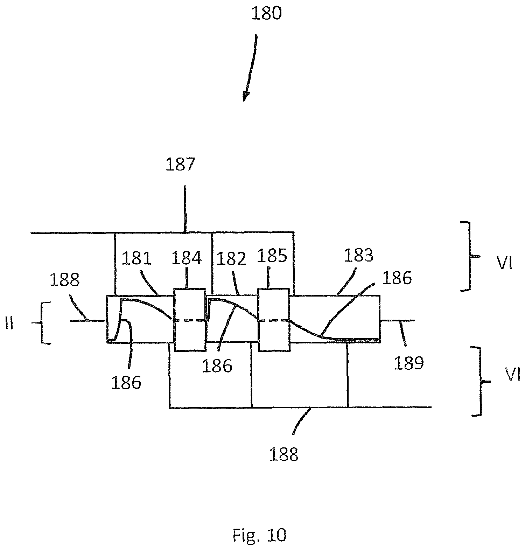

Figur 10 zeigt schematisch eine kombinierte Prozessgruppe 180 mit drei Prozesseinheiten, nämlich einer ersten Prozesseinheit 181, einer zweiten Prozesseinheit 182 und einer dritten Prozesseinheit 183, welche mit zugeordneten Wärmespeichern 181 bis 183 abwechslungsweise in Serie geschaltet sind.

Die Temperaturverteilung in der Prozessgruppe 180 nach einem Startvorgang entspricht der direkt in die Wärmespeicher 181 bis 183 und Prozesseinheiten 184 bis 185 eingezeichneten Temperaturverteilungskurve 186 (wobei die durch die Prozesseinheiten 184,185 laufenden Abschnitte gestrichelt dargestellt sind).

Wiederum sind zwei Leitungsanschlüsse 188,189 eines Abschnitts II der Leitungsanordnung L vorhanden, durch welche im Betrieb der kombinierten Prozessgruppe 180 Wärme transportierendes Fluid der Länge nach durch die Prozessgruppe 180 hindurch strömen kann, und wiederum ist eine Steuerung für die Prozessgruppe 180 sowie Gastanks für O₂ und H₂O (s. Figur 1) zur Entlastung der Figur weggelassen. Auch verbindet der zweite Abschnitt II der Leitungsanordnung L die kalten Seiten des ersten 181 und dritten Wärmespeichers 183.

Die Temperaturverteilungskurve 186 zeigt einen sägezahnartigen Verlauf, im Gegensatz zur im Wesentlichen symmetrischen, beispielsweise sinusartigen Form in den vorangehenden Figuren, mit der Folge, dass eine Welle W_{S} mit mehreren Wellenspitzen vorhanden ist, derart, dass bei einer Rechtsverschiebung der W die Prozesseinheiten 184,185 synchron erwärmt und bei einer Linksverschiebung synchronn gekühlt werden.

An dieser Stelle sei angemerkt, dass die Temperaturverteilungskurven auch durch Leitungen auseinandergerissen werden können, wie dies beispielsweise in den Prozesseinheiten der Fall ist. So ist es denkbar, zwei Teile des funktionell einen Wärmespeichers durch einen Leitungsabschnitt zu trennen und damit eine Temperaturflanke auseinander zu reissen. Solche Trennungen werden hier nicht berücksichtigt, wenn die Form einer Welle W, Wₐ-W_{d} oder W_{K} (symmetrisch, asymmetrisch, sinusartig, Sägezahn etc.) diskutiert wird, da die in den Prozesseinheiten gewünschten Temperaturen mit der Art und der Anordnung der Trennungen an sich nichts zu tun hat.

Ein sechster Abschnitt VI der Leitungsanordnung L besitzt bevorzugt verzweigte Leitungen 187,188, die an den Enden der Wärmespeicher 181 bis 183 in diese münden (bei einer nicht dargestellten Ausführungsform münden diese auch in die Prozesseinheiten 184,185). Dies erlaubt für den Startvorgang in jedem der Wärmespeicher einzeln die gewünschte Temperaturschichtung zu erzeugen, was insbesondere bei einer Welle mit steilen Flanken (beispielsweise dem hier gezeigten Sägezahn) vorteilhaft sein kann. Im Gegensatz zum ordentlichen Betrieb der Prozesseinheit 180, bei welchem die Verschiebung der Welle nur geringfügig ist, muss in einem über die Leitungen 188,189 erfolgenden Startvorgang der zuerst erzeugte Wellenabschnitt durch die gesamte Anordnung laufen, was zu einer unerwünschten Abflachung dieses zuerst erzeugten Wellenabschnitts führen kann. Durch den sechsten Abschnitt VI der Leitungsanordnung L kann während dem Startvorgang jeder einzelne Wärmespeicher 181 bis 183 individuell mit Wärme transportierendem Fluid durchströmt werden, so dass sich in jedem Wärmespeicher 181 bis 183 die gewünschte Wärmeverteilung bezw. Temperaturschichtung exakt ausbildet. Zudem kann durch den sechsten Abschnitt VI auch Wärme aus einer weiteren, externen Wärmequelle zugeführt werden, um Temperaturen in den Prozesseinheiten 184,185 oberhalb T_{R} zu erreichen (s. dazu Figur 2).

Es ergibt sich, dass die Leitungsanordnung L einen sechsten Abschnitt VI aufweist, dessen Leitungen mit jedem der Wärmespeicher und/oder mit jeder der Prozesseinheiten betriebsfähig verbunden sind, wobei eine Steuerung derart ausgebildet ist, in einem dritten Schaltzustand der Leitungsanordnung L über den sechsten Abschnitt VI die angeschlossenen Wärmespeicher und/oder Prozesseinheiten vorbestimmt mit Wärme zu beaufschlagen, derart, dass sich in jeder der Prozessgruppen eine vorbestimmte Temperaturverteilung in Form einer Welle W, Wₐ - W_{d} oder W_{K} ergibt.

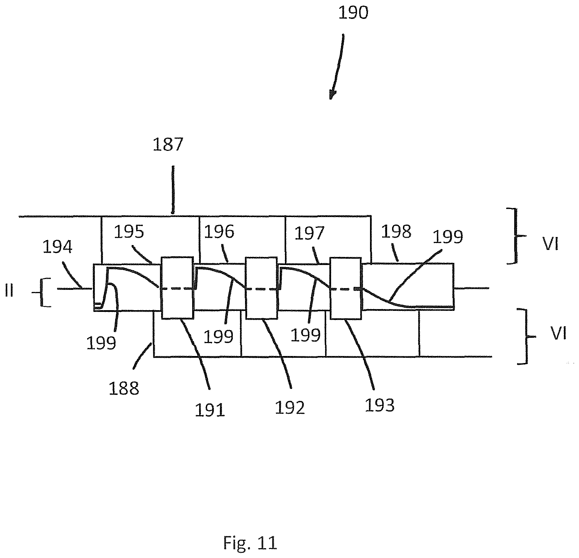

Figur 11 zeigt eine Prozesseinheit 190 mit mehr als zwei Prozesseinheiten 191 bis 193 und mehr als drei Wärmespeichern 194 bis 198. Der Unterschied zur Anordnung von Figur 10 liegt in der Anzahl der Prozesseinheiten - die Figur zeigt, dass bei der dargestellten Ausführungsform mit der sägezahnartigen Ausbildung der Welle Wₛ die Anzahl der in einer kombinierten Prozessgruppe vorgesehenen Wärmespeicher grundsätzlich nicht limitiert ist. Entsprechend zeigt die Temperaturverteilungskurve 199 drei Wellenkämme an Stelle der zwei in der Figur 10 ersichtlichen.

Zusammenfassend zeigt Figur 11 ein Prozesssystem, bei welchem durch die Leitungsanordnung (L) drei Prozesseinheiten mit fünf Wärmespeichern einander abwechselnd in Serie geschaltet sind, derart, dass jeweils zwei Prozesseinheiten einen Wärmespeicher zwischen sich einschliessen.

Es ergibt sich aus den oben dargestellten Ausführungsformen, dass erfindungsgemäss ein Prozesssystem mit Wärmespeichern vorgesehen ist, die ausgebildet sind, Wärme zwischen einer oberen (TO) und einer unteren Temperatur (TU) zu speichern und wieder abzugeben und mit einer Leitungs-anordnung (L) für den Transport von Wärme transportierendem Medium zu den Wärmespeichern und von diesen wieder weg, wobei mehrere, zwischen der oberen (TO) und der unteren Temperatur (TU) betreibbare Prozesseinheiten vorgesehen sind, die je durch die Leitungsanordnung (L) betriebsfähig zwischen zwei Wärmespeichern angeordnet sind.

Gleichzeitig ergibt sich ein Verfahren zum zyklischen Erwärmen und Kühlen von mehreren Prozesseinheiten, die zwischen einer oberen (TO) und einer unteren Temperatur (TU) betreibbar sind, wobei bevorzugt wenigstens zwei Prozesseinheiten phasenverschoben erwärmt und wieder gekühlt werden, wobei die Prozesseinheiten aus einem ihnen jeweils zugeordneten Wärmespeicher erwärmt werden und während der Kühlung abgegebene Wärme in einen ihnen zugeordneten Wärmespeicher abgeben.

## Patentansprüche

1. Prozessgruppe mit einer ersten (161) und einer zweiten Prozesseinheit (162), die als Reaktoren ausgebildet sind, wobei ein vorderer (163), ein mittlerer (164) und ein hinterer Wärmespeicher (165) vorgesehen sind, welche in Serie geschaltet sind und welche als geschichtete Wärmespeicher ausgebildet sind, derart, dass in ihnen eine Temperaturverteilung erzeugt werden kann, die eine Temperaturwelle ausbilden, wobei über Leitungsanschlüsse (166a), (166b) einer Leitungsanordnung (L) für Wärme transportierendes Fluid dieses der Länge nach durch die Anordnung von abwechselnd den Wärmespeichern (163 bis 165) und den Prozesseinheiten (161), (162) strömen kann, wobei die Leitungsanordnung (L) derart geschaltet werden kann, dass das Fluid die kombinierte Prozessgruppe (160) zyklisch wechselnd vom Leitungsanschluss (166a) zum Leitungsanschluss (166b) und vom Leitungsanschluss (166b) zum Leitungsanschluss (166a) durchströmt.

2. Prozessgruppe nach Anspruch 1, wobei durch die Leitungsanordnung (L) drei Prozesseinheiten (191-193) mit vier Wärmespeichern (195-198) einander abwechselnd in Serie geschaltet sind, derart, dass jeweils zwei Prozesseinheiten (191,192 und 192,193) einen Wärmespeicher (196,197) zwischen sich einschliessen.

3. Prozessgruppe nach Anspruch 1, wobei ein von Prozesseinheiten (161,162,184,185,191 bis 193) zwischen sich eingeschlossener Wärmespeicher (164,182,196,197) eine Länge im Bereich eines Viertels einer Temperaturwelle W_{K} aufweisen.

4. Prozessgruppe nach Anspruch 1 , wobei die an deren Enden liegenden Wärmespeicher (163,165,181,183,195,198) eine Länge im Bereich einer halben Temperaturwelle W_{K} aufweisen.

5. Prozessgruppe (160,180,190) nach Anspruch 1, wobei im Betrieb die Wärmespeicher (163-165,181-183,195-198) eine Temperaturverteilung aufweisen, die einer im wesentlichen symmetrischen Temperaturwelle (W,Wₐ-W_{d},W_{K}) entspricht.

6. Prozessgruppe (160,180,190) nach Anspruch 1, wobei im Betrieb die Wärmespeicher (163-165,181-183,195-198) eine Temperaturverteilung aufweisen, die einer im wesentlichen asymmetrischen Temperaturwelle (W,Wₐ-W_{d},W_{K}), bevorzugt in der Art eines Sägezahns, entspricht.

7. Verfahren zum zyklischen Erwärmen und Kühlen einer Prozessgruppe nach einem der vorhergehenden Ansprüche, wobei die Prozessgruppe mehrere, als Reaktor ausgebildete Prozesseinheiten (161, 162, 184, 185, 191 - 193) aufweist, wobei der Reaktor für einen Prozessschritt auf einer oberen (To) und einen Prozessschritt auf einer unteren Temperatur (Tu) betrieben wird, wobei wenigstens zwei Prozesseinheiten (161,162,184,185) erwärmt und wieder gekühlt werden, wobei jede Prozesseinheit (161,162,184,185) aus einem ihr jeweils zugeordneten Wärmespeicher (163 bis 165, 181 bis 183, 195 bis 199) erwärmt wird und während der Kühlung abgegebene Wärme in einen ihnen zugeordneten Wärmespeicher (163 bis 165, 181 bis 183, 195 bis 199) abgibtund wobei durch eine Leitungsanordnung (L) Prozesseinheiten (161-162,184-185,191-193) und die ihnen zugeordneten Wärmespeicher (163-165,181-183,195-198) einander abwechselnd in Serie geschaltet werden, dabei die Wärmespeicher (163-165,181-183,195-198) mit einer wellenförmigen Temperaturschichtung betrieben werden, die eine Welle W_{K} ausbildet, welche sich entsprechend einer Strömungsrichtung von Wärme transportierendem Medium durch die Wärmespeicher (163-165,181-183,195-198) und Prozesseinheiten (161-162,184-185,191-193) bewegt, dabei weiter ein Wechsel der Strömungsrichtung durch die Wärmespeicher (163-165,181-183,195-198) und Prozesseinheiten (161-162,184-185,191-193) hindurch derart getaktet wird, derart, dass die Welle W_{K} fortlaufend hin- und her schwingend wenigstens teilweise durch alle Prozesseinheiten (161-162,184-185,191-193) hindurch läuft.

## Claims

1. A process group comprising a first (161) and a second process unit (162) which are designed as reactors, wherein a front (163), a middle (164) and a rear heat accumulator (165) are provided which are connected in series and which are designed as layered heat accumulators in such a way that a temperature distribution can be generated in them which form a temperature wave, wherein, via line connections (166a), (166b) of a conduit arrangement (L) for heat-transporting fluid, this fluid can flow longitudinally through the arrangement of alternately the heat accumulators (163) to (165) and the process units (161), (162), wherein the conduit arrangement (L) can be switched in such a way that the fluid flows through the combined process group (160) cyclically alternately from the conduit connection (166a) to the conduit connection (166b) and from the conduit connection (166b) to the conduit connection (166a).

2. Process group according to claim 1, wherein three process units (191-193) with four heat accumulators (195-198) are connected alternately in series with one another by the line arrangement (L) in such a way that in each case two process units (191,192 and 192,193) enclose a heat accumulator (196,197) between them.

3. Process group according to claim 1, wherein a heat accumulator (164,182,196,197) enclosed by process units (161,162,184,185,191 to 193) between them has a length in the range of a quarter of a temperature wave WK.

4. Process group according to claim 1, wherein the heat accumulators (163,165,181,183,195,198) located at the ends thereof have a length in the range of a half temperature wave WK.

5. Process group (160,180,190) according to claim 1, wherein in operation the heat accumulators (163-165,181-183,195-198) have a temperature distribution corresponding to a substantially symmetrical temperature wave (W,Wa-Wd,WK).

6. Process group (160,180,190) according to claim 1, wherein in operation the heat accumulators (163-165,181-183,195-198) have a temperature distribution corresponding to a substantially asymmetric temperature wave (W,Wa-Wd,WK), preferably in the manner of a sawtooth.

7. Method for cyclically heating and cooling a process group according to one of the preceding claims, the process group having a plurality of process units (161, 162, 184, 185, 191 - 193) in the form of a reactor, the reactor being operated at an upper temperature (TO) for one process step and at a lower temperature (TU) for another process step, at least two process units (161, 162, 184, 185) being heated and cooled again, each process unit (161, 162, 184, 185) being heated from a heat accumulator (163 to 165, 181 to 183, 195 to 199) assigned to it in each case and discharging heat given off during cooling into a heat accumulator (163 to 165, 181 to 183, 195 to 199) assigned to it, and 195 to 199) associated with themand wherein process units (161-162, 184-185, 191-193) and the heat accumulators (163-165, 181-183, 195-198) associated with them are connected alternately in series with one another by a line arrangement (L), the heat accumulators (163-165, 181-183, 195-198) being operated with an undulating temperature stratification which forms a wave WK, which moves through the heat accumulators (163-165,181-183,195-198) and process units (161-162,184-185,191-193) according to a flow direction of heat-transporting medium, a change of the flow direction through the heat accumulators (163-165,181-183,195-198) and process units (161-162,184-185,191-193) being further timed in such a way that the wave WK is continuously reciprocated.

## Revendications

1. Groupe de processus avec une première (161) et une deuxième unité de processus (162) qui sont réalisées sous forme de réacteurs, un accumulateur de chaleur avant (163), un accumulateur de chaleur central (164) et un accumulateur de chaleur arrière (165) étant prévus, lesquels sont montés en série et sont réalisés sous forme d'accumulateurs de chaleur stratifiés de telle sorte qu'une répartition de température puisse être produite dans ceux-ci, lesquels forment une onde de température, des raccords de conduite (166a), (166b) d'un agencement de conduites (L) pour un fluide transportant de la chaleur, celui-ci peut s'écouler longitudinalement à travers l'agencement des accumulateurs de chaleur (163) à (165) et des unités de traitement (161), (162) en alternance, l'agencement de conduites (L) pouvant être commuté de telle sorte que le fluide traverse le groupe de traitement combiné (160) en alternance cyclique du raccord de conduite (166a) au raccord de conduite (166b) et du raccord de conduite (166b) au raccord de conduite (166a).

2. Groupe de processus selon la revendication 1, dans lequel trois unités de processus (191-193) avec quatre accumulateurs de chaleur (195-198) sont montées en série alternativement les unes avec les autres par l'intermédiaire de l'agencement de conduites (L), de telle sorte que deux unités de processus (191, 192 et 192, 193) enferment respectivement un accumulateur de chaleur (196, 197) entre elles.

3. Groupe de processus selon la revendication 1, dans lequel un accumulateur de chaleur (164, 182, 196, 197) enfermé entre des unités de processus (161, 162, 184, 185, 191 à 193) présente une longueur dans la plage d'un quart d'une onde de température W_{K}.

4. Groupe de processus selon la revendication 1, dans lequel les accumulateurs de chaleur (163, 165, 181, 183, 195, 198) situés à leurs extrémités présentent une longueur dans la plage d'une demi-onde de température W_{K}.

5. Groupe de traitement (160, 180, 190) selon la revendication 1, dans lequel, en fonctionnement, les accumulateurs de chaleur (163-165, 181-183, 195-198) présentent une répartition de température qui correspond à une onde de température sensiblement symétrique (W, W - W_{ad} ,W_{K}).

6. Groupe de processus (160, 180, 190) selon la revendication 1, dans lequel, en fonctionnement, les accumulateurs de chaleur (163-165, 181-183, 195-198) présentent une répartition de température qui correspond à une onde de température sensiblement asymétrique (W, W - W_{ad} ,W_{K}), de préférence à la manière d'une dent de scie.

7. Procédé de chauffage et de refroidissement cycliques d'un groupe de processus selon l'une des revendications précédentes, le groupe de processus présentant plusieurs unités de processus (161, 162, 184, 185, 191 à 193) réalisées sous forme de réacteur, le réacteur étant exploité pour une étape de processus à une température supérieure (T_{O}) et pour une étape de processus à une température inférieure (T_{U}), au moins deux unités de processus (161,162, 184, 185) sont chauffées et à nouveau refroidies, chaque unité de processus (161, 162, 184, 185) étant chauffée à partir d'un accumulateur de chaleur (163 à 165, 181 à 183, 195 à 199) qui lui est respectivement associé et cédant la chaleur cédée pendant le refroidissement dans un accumulateur de chaleur (163 à 165, 181 à 183, 195 à 199) qui lui est associé, et des unités de processus (161-162, 184, 185) étant chauffées par un agencement de conduites (L),184-185, 191-193) et les accumulateurs de chaleur (163-165, 181-183, 195-198) qui leur sont associés sont montés alternativement en série les uns avec les autres, les accumulateurs de chaleur (163-165, 181-183, 195-198) fonctionnant avec une stratification de température ondulée qui forme une onde W_{K} qui se déplace en fonction d'une direction d'écoulement du milieu transportant la chaleur à travers les accumulateurs de chaleur (163-165, 181-183, 195-198),181-183, 195-198) et des unités de traitement (161-162, 184-185, 191-193), un changement de la direction d'écoulement à travers les accumulateurs de chaleur (163-165, 181-183, 195-198) et les unités de traitement (161-162, 184-185, 191-193) étant en outre cadencé de telle sorte que l'onde W_{K} traverse au moins partiellement toutes les unités de traitement (161-162, 184-185, 191-193) en oscillant en continu dans un sens et dans l'autre.
